# EUROPÄISCHE PATENTSCHRIFT

(11) **EP 3 666 607 B1**
(45) Veröffentlichungstag und Bekanntmachung des Hinweises auf die Patenterteilung: **03.11.2021**
(21) Anmeldenummer: 19190031.5
(22) Anmeldetag: 07.01.2015
(51) Int. Cl.: B60R 25/24, G07C 9/00

(54) **VERFAHREN ZUM BEREITSTELLEN EINES ARBEITSSIGNALS**
METHOD OF PREPARING AN OPERATING SIGNAL
PROCÉDÉ DE PRODUCTION D'UN SIGNAL DE TRAVAIL

(30) Priorität: 31.01.2014 DE 102014101192
(43) Veröffentlichungstag der Anmeldung: 17.06.2020
(62) Teilanmeldung aus: 15701664.3
(73) Patentinhaber: Huf Hülsbeck & Fürst GmbH & Co. KG, 42551 Velbert (DE)
(72) Erfinder: Mönig, Stefan, 58332 Schwelm (DE); Lindic, Iko, 45149 Essen (DE); Schindler, Mirko, 42549 Velbert (DE); Hache, Christof, 42551 Velbert (DE); Schumacher, Helmut, 48653 Coesfeld (DE); Heller, Norbert, 47929 Grefrath (DE); Müller, Oliver, 42551 Velbert (DE); Ette, Bernd, 38442 Wolfsburg (DE); Sticherling, Nadine, 58285 Gevelsberg (DE); Ziegler, Alexander, 42489 Wülfrath (DE); Yomkil Malabo, Jean, 42897 Remscheid (DE)
(74) Vertreter: Patentanwälte Bals & Vogel

(56) Entgegenhaltungen:
- WO-A1-2013/037806
- DE-A1-102007 050 094
- DE-A1-102008 021 989
- DE-A1-102009 023 594
- DE-A1-102010 056 171
- DE-A1-102011 115 760
- DE-B3-102005 032 402
- JP-A- 2013 049 953

## Beschreibung

Die Erfindung betrifft ein Verfahren zum Bereitstellen eines Arbeitssignals für ein Kraftfahrzeug gemäß dem Patentanspruch 1. Des Weiteren betrifft die Erfindung ein Montagemodul für ein Kraftfahrzeug gemäß dem unabhängigen Patentanspruch 12.

Die DE 10 2008 021 989 A1 offenbart ein Verfahren zum Bereitstellen eines Arbeitssignals für ein Kraftfahrzeug, bei dem ein sichtbares Bedienfeld bereitgestellt wird. Berührt der Benutzer das Bedienfeld z. B. mit einem Fuß, so ist nach einer Entriegelung einer Fahrzeugtür ein automatisches Öffnen der Fahrzeugtür einleitbar.

Nachteilig hieran ist, dass der Benutzer das Öffnen der Fahrzeugtür auch einleitet, wenn der Benutzer sich vollständig in dem Bedienfeld befindet. Hierbei kann der Benutzer von der Fahrzeugtür getroffen und verletzt werden. Ebenso kann das Öffnen der Fahrzeugtür eingeleitet werden, wenn z. B. eine Katze oder ein Hund durch das Bedienfeld läuft und der Benutzer selber sich unmittelbar an der Fahrzeugtür befindet, so dass der Benutzer auch in diesem Fall von der Fahrzeugtür getroffen und verletzt werden kann.

Es ist daher die Aufgabe der vorliegenden Erfindung, ein Verfahren und ein Montagemodul für ein Kraftfahrzeug bereitzustellen, das zumindest einen der vorgenannten Nachteile überwindet, insbesondere ein für den Benutzer gefahrloses Öffnen eines beweglichen Teils des Kraftfahrzeuges ermöglicht.

Zur Lösung der Aufgabe wird ein Verfahren mit sämtlichen Merkmalen des Anspruches 1 vorgeschlagen. Vorteilhafte Weiterbildungen des Verfahrens sind in den abhängigen Verfahrensansprüchen angegeben. Die Aufgabe wird weiterhin gelöst durch ein Montagemodul gemäß dem unabhängigen Anspruch 12. Vorteilhafte Weiterbildungen des Montagemoduls sind in den abhängigen Vorrichtungsansprüchen angegeben. Ferner wird ein Authentifizierungssystem mit einem erfindungsgemäßen Montagemodul, einem ID-Geber und einem Zugangskontrollsystem im Anspruch 23 unter Schutz gestellt. Merkmale und Details, die im Zusammenhang mit dem erfindungsgemäßen Montagemodul und/oder Authentifizierungssystem beschrieben sind, gelten dabei auch im Zusammenhang mit dem erfindungsgemäßen Verfahren und umgekehrt. Dabei können die in den Ansprüchen und in der Beschreibung erwähnten Merkmale jeweils einzeln für sich oder in Kombination erfindungswesentlich sein. Zusätzlich wird ein Kraftfahrzeug mit einem erfindungsgemäßen Montagemodul und/oder mit einem erfindungsgemäßen Authentifizierungssystem unter Schutz gestellt.

Erfindungsgemäß weist das Verfahren die folgenden Schritte auf:
a) Erhalt eines Signals, dass ein berechtigter Benutzer authentifiziert ist,
b) Überwachung eines außerhalb des Kraftfahrzeugs liegenden Betätigungsbereichs durch ein optisches Sensorsystem,
c) Erfassung eines Abstandes eines Objektes im Betätigungsbereich zu einem optischen Sensor durch das optische Sensorsystem,
d) Vergleich des Abstandes mit einer Vorgabe durch das optische Sensorsystem,
e) Bereitstellen eines Arbeitssignals bei Erfüllung der Vorgabe.

Insbesondere wird Schritt b) nach Schritt a) ausgeführt. Die Schritte c) und d) werden insbesondere während Schritt b) ausgeführt. Bei Erfüllen der Vorgabe wird insbesondere Schritt b) beendet und Schritt e) ausgeführt. Der Vergleich kann ein direkter Vergleich, in dem der in Schritt c) erfasste Abstand direkt mit der Vorgabe verglichen wird, oder ein indirekter Vergleich, in dem durch den Abstand eine weitere Größe bestimmt wird und diese dann mit der Vorgabe verglichen wird, sein. Anders ausgedrückt, wird in Schritt d) der in Schritt c) erfasste Abstand zu einer Vorgabe in Beziehung gesetzt.

Dadurch, dass ein Abstand eines Objekts im Betätigungsbereich zu dem optischen Sensor erfasst wird, und dieser Abstand eine Vorgabe erfüllen muss, damit das Arbeitssignal bereitgestellt wird, wird eine Bedingung für das Bereitstellen des Arbeitssignals geschaffen, so dass nicht jedes Objekt im Betätigungsbereich das Arbeitssignal auslöst. Bei Abständen, die nicht die Vorgabe erfüllen, wird kein Arbeitssignal bereitgestellt. Vielmehr wird das Arbeitssignal nur bereitgestellt, wenn die Vorgabe erfüllt ist. Durch die Bedingung wird erreicht, dass eine Handlung des Benutzers im Betätigungsbereich, durch die nicht das Arbeitssignal ausgelöst werden soll, oder ein nicht erwünschtes Objekt, wie z. B. ein Hund, im Betätigungsbereich das Arbeitssignal nicht auslöst. Vielmehr wird nur durch eine bewusste Handlung des Benutzers das Arbeitssignal ausgelöst. Die bewusste Handlung des Benutzers kann insbesondere mit einer Hand oder einem Fuß durchgeführt werden. Dadurch, dass das Arbeitssignal nicht unerwünscht oder unerwartet bereitgestellt wird, wird der Benutzer davon nicht überrascht. Vielmehr wird ein Benutzerwillen erkannt. Somit gefährdet der durch das Arbeitssignal ausgelöste Vorgang, z. B. das Öffnen eines beweglichen Teils des Kraftfahrzeugs, den Benutzer weniger.

Das Arbeitssignal kann ein Signal zum Entriegeln und/oder Verriegeln und/oder Öffnen und/oder Schließen eines beweglichen Teils des Kraftfahrzeuges sein. Bei dem beweglichen Teil kann es sich insbesondere um eine Heckklappe und/oder eine Seitentür des Kraftfahrzeuges handeln. Die Heckklappe und/oder die Seitentür kann als Schiebetür ausgebildet sein. Durch das Arbeitssignal kann das bewegliche Teil z. B. entriegelt werden. Durch die Federwirkung einer Dichtung kann sich das bewegliche Teil danach teilweise aus einer geschlossenen Stellung bewegen und somit teilweise öffnen. Zusätzlich oder alternativ kann das Arbeitssignal ein Signal zur Aktivierung einer motorischen Öffnungs- und/oder Zuziehhilfe sein. Hierbei weist das Kraftfahrzeug einen Motor auf, der das bewegliche Teil vollständig öffnet und/oder schließt.

Alternativ oder zusätzlich kann das Arbeitssignal ein Signal zum Ein- und/oder Ausfahren einer Anhängerkupplung sein. Insbesondere können bei der Überwachung des Betätigungsbereichs mehrere verschiedene Benutzerwillen, wie z. B. der Benutzerwille, ein bewegliches Teil zu öffnen, und der Benutzerwille, die Anhängerkupplung auszufahren, festgestellt werden.

Es ist denkbar, dass der Betätigungsbereich auf einer Bodenfläche, auf der das Kraftfahrzeug steht, endet. Der Betätigungsbereich weist an der Bodenfläche eine Endfläche auf. Hierbei kann der Betätigungsbereich im Wesentlichen orthogonal zur Bodenfläche verlaufen oder einen Neigungswinkel zu einer Ebene, die parallel zu einer die Fahrzeugachsen verbindenden Ebene verläuft, aufweisen. Dieser Neigungswinkel entspricht insbesondere dem Neigungswinkel des optischen Sensors.

Insbesondere weist der Betätigungsbereich einen kegelstumpfförmigen Bereich mit einer runden oder elliptischen Grundfläche auf. Der kegelstumpfförmige Bereich kann insbesondere einem schrägen Kegelstumpf entsprechen.

Vorzugsweise entspricht die Vorgabe einer Mindestabstandsbedingung des Abstandes des Objekts zum optischen Sensor. Das Arbeitssignal wird somit nur dann bereitgestellt, wenn das Objekt dem optischen Sensor nicht zu nahe kommt. Hierdurch wird erreicht, dass der Benutzer weit genug vom optischen Sensor entfernt ist. Da der optische Sensor in der Nähe des beweglichen Teils eingebaut sein kann, kann hierdurch erreicht werden, dass der Benutzer sich weit genug entfernt von dem beweglichen Teil befindet. Somit kann die Sicherheit des Benutzers weiter erhöht werden.

Die Mindestabstandsbedingung kann als ein fester Wert in dem optischen Sensorsystem gespeichert sein. Alternativ kann die Mindestabstandsbedingung variabel gehalten sein. So kann die Mindestabstandsbedingung z. B. von einer Bodenfläche, auf der das Kraftfahrzeug steht, abhängig sein. Die Mindestabstandsbedingung kann in einer Überwachungseinheit des optischen Sensorsystems gespeichert sein.

Insbesondere kann die Vorgabe, insbesondere die Mindestabstandsbedingung, einem fest vorgegebenen und in dem optischen Sensorsystem hinterlegten Mindestabstand des Objekts zum optischen Sensor entsprechen. Nur wenn der Abstand des Objekts zum optischen Sensor den Mindestabstand überschreitet, wird das Arbeitssignal bereitgestellt. In dem optischen Sensorsystem, insbesondere in der Überwachungseinheit, kann ein absoluter Wert für den Mindestabstand des Objekts zum optischen Sensor gespeichert sein. Während der Überwachung des Betätigungsbereichs wird der Abstand des Objekts zum optischen Sensor erfasst. Nur wenn der erfasste Abstand größer als der Mindestabstand ist, ist die Vorgabe erfüllt. Der Mindestabstand kann mit einer Einbauhöhe, mit der der optische Sensor in das Kraftfahrzeug einzubauen ist, variieren. Ebenfalls kann der Mindestabstand von dem Neigungswinkel des optischen Sensors variieren. So kann der Mindestabstand größer gewählt werden, je größer die Einbauhöhe und/oder je geringer der Neigungswinkel gewählt ist. Die Wahl eines festen Mindestabstands zum optischen Sensor hat den Vorteil, dass als Vorgabe ein direkter Grenzwert für die in Schritt c) erfasste Größe gewählt ist und somit die Rechenkapazität des optischen Sensorsystems geschont wird. Ebenfalls müssen keine weiteren Größen bei der Wahl des festen Mindestabstands als Vorgabe erfasst werden.

Ebenfalls ist es denkbar, dass die Vorgabe, insbesondere die Mindestabstandsbedingung, einem Mindestwert für ein Verhältnis des Abstands des Objektes zum optischen Sensor zu einem Abstand einer Endfläche des Betätigungsbereichs zum optischen Sensor entspricht. Nur wenn durch einen entsprechenden Abstand des Objekts zum optischen Sensor der Mindestwert für das Verhältnis überschritten wird, wird das Arbeitssignal bereitgestellt. In dem optischen Sensorsystem, insbesondere in der Überwachungseinheit, kann ein absoluter Wert für den Mindestwert für das Verhältnis fest gespeichert sein. Der Abstand der Endfläche des Betätigungsbereichs zum optischen Sensor kann als fester Wert in dem optischen Sensorsystem hinterlegt oder vorzugsweise während der Überwachung vom optischen Sensorsystem erfasst werden. Während der Überwachung des Betätigungsbereichs wird der Abstand des Objekts zum optischen Sensor erfasst. Das Verhältnis des Abstands des Objekts zum optischen Sensor zum Abstand der Endfläche des Betätigungsbereichs zum optischen Sensor wird gebildet. Nur wenn das Verhältnis größer als der Mindestwert ist, ist die Vorgabe erfüllt. Der Mindestwert kann mit der Einbauhöhe und dem Neigungswinkel des optischen Sensors variieren. Insbesondere kann mit zunehmender Einbauhöhe und abnehmendem Neigungswinkel der Mindestwert erhöht sein.

Wird der Mindestwert als Vorgabe gewählt, so kann vorteilhafterweise ein sich ändernder Betätigungsbereich bei der Vorgabe berücksichtigt werden. Endet der Betätigungsbereich auf der Bodenfläche, so kann die Vorgabe dem Mindestwert für ein Verhältnis des Abstands des Objektes zum optischen Sensor zu einem Abstand der Bodenfläche im Betätigungsbereich zum optischen Sensor entsprechen. Ist die Bodenfläche hügelig, so kann hierdurch die hügelige Bodenfläche bei der Erfüllung der Vorgabe berücksichtigt werden.

Als eine weitere Möglichkeit kann vorgesehen sein, dass die Vorgabe, insbesondere die Mindestabstandsbedingung, einer fest vorgegebenen und in dem optischen Sensorsystem hinterlegten maximalen Entfernung einer dem optischen Sensor zugewandten Oberfläche des Objektes zu einer Endfläche des Betätigungsbereichs, die sich insbesondere an einer Bodenfläche befindet, entspricht. Nur wenn die Entfernung der dem optischen Sensor zugewandten Oberfläche des Objekts zu einer Endfläche des Betätigungsbereichs, insbesondere an der Bodenfläche, die maximale Entfernung unterschreitet, wird das Arbeitssignal bereitgestellt. In dem optischen Sensorsystem, insbesondere in der Überwachungseinheit, kann ein absoluter Wert für die maximale Entfernung gespeichert sein. Der Abstand der Endfläche des Betätigungsbereichs zum optischen Sensor kann als fester Wert in dem optischen Sensorsystem hinterlegt oder vorzugsweise während der Überwachung vom optischen Sensorsystem erfasst werden. Während der Überwachung des Betätigungsbereichs wird der Abstand des Objekts zum optischen Sensor erfasst. Aus dem Abstand der Endfläche des Betätigungsbereichs zum optischen Sensor und dem Abstand des Objekts zum optischen Sensor wird die Entfernung einer dem optischen Sensor zugewandten Oberfläche des Objekts zur Endfläche des Betätigungsbereichs, insbesondere zur Bodenfläche, bestimmt. Nur wenn die so bestimmte Entfernung kleiner als die maximale Entfernung ist, ist die Vorgabe erfüllt. Hierdurch wird eine weitere Möglichkeit geschaffen, eine variierende Länge des Betätigungsbereichs, insbesondere bei einer variierenden Bodenfläche, zu berücksichtigen.

Über einen Auftreffwinkel auf der Bodenfläche und die Abstände des Objekts und der Endfläche zum optischen Sensor kann ein zur Bodenfläche orthogonaler Abstand c der dem optischen Sensor zugewandten Oberfläche des Objekts zur Endfläche ermittelt werden. Es ist denkbar, dass nur wenn der Abstand c einen maximalen Abstand unterschreitet, das Arbeitssignal bereitgestellt wird. Der maximale Abstand kann in dem optischen Sensorsystem fest vorgegeben sein. Der Auftreffwinkel entspricht bei einer ebenen Bodenfläche dem Neigungswinkel. Es ist denkbar, vereinfachend den Neigungswinkel anstelle des Auftreffwinkels zu verwenden.

Insbesondere, wenn der Betätigungsbereich an der Bodenfläche endet, kann die Mindestabstandsbedingung so ausgelegt sein, dass der Abstand c einem maximalen Abstand entsprechen darf, um die Vorgabe zu erfüllen. Im Regelfall kann vorgesehen sein, dass der Benutzer mit dem Fuß auf die Bodenfläche im Betätigungsbereich treten muss, um die Vorgabe zu erfüllen. Um den Falle einer Pfütze oder einer sumpfigen Stelle an der Bodenfläche des Betätigungsbereichs zu berücksichtigen, kann jedoch auch vorgesehen sein, dass der Benutzer den Fuß geringfügig oberhalb der Bodenfläche halten darf, um die Vorgabe zu erfüllen. So kann insbesondere der maximale Abstand cₘₐₓ für den Abstand c mit 0 ≤ cₘₐₓ ≤ 30 cm, bevorzugt 0 ≤ cₘₐₓ ≤ 20 cm, besonders bevorzugt 0 ≤ cₘₐₓ ≤ 10 cm gewählt sein. Auch wenn eine andere Mindestabstandsbedingung gewählt wird, kann diese so vorgegeben werden, dass die genannten Bedingungen für cₘₐₓ zutreffen.

Die verschiedenen Möglichkeiten für eine Mindestabstandsbedingung können beliebig kombiniert werden. So können ein fest vorgegebener Mindestabstand, ein Mindestwert für das Verhältnis, eine fest vorgegebene maximale Entfernung und/oder ein fest vorgegebener maximaler Abstand vorgesehen sein.

Bei den erfassten Abständen kann es sich insbesondere um über das ganze Objekt und/oder über die ganze Endfläche gemittelte Abstände handeln. Alternativ kann es sich um einzelne Punkte des Objekts und/oder der Endfläche handeln. Insbesondere können z. B. der Abstand des Objekts zum optischen Sensor und der Abstand der Endfläche zum optischen Sensor, die auf einer Geraden liegen, miteinander in Beziehung gesetzt werden.

Das optische Sensorsystem kann insbesondere anhand einer Intensitätsänderung des empfangenen Lichts bestimmen, dass sich ein Objekt in dem Betätigungsbereich befindet.

Um einen Abstand des Objektes zum optischen Sensor erfassen zu können, kann beispielsweise eine Time of Flight Messung durchgeführt werden. Hierbei werden z. B. ein oder mehrere Lichtpulse von dem optischen Sensorsystem, insbesondere von einem Lichtmodul des optischen Sensorsystems, emittiert und die Zeit, die der Lichtpuls zum Objekt und von dort zum optischen Sensor benötigt, gemessen. Die Zeit ist hierbei direkt proportional zum Abstand des Objektes. Es kann sein, dass mehrere Lichtpulse nacheinander von dem optischen Sensorsystem, insbesondere von dem Lichtmodul, emittiert werden, um ein Bild erzeugen zu können. Die Lichtpulse können aufintegriert oder aufsummiert werden, um das Bild zu erzeugen. Um in diesem Fall eine Abstandserfassung durchführen zu können, wird ein bestimmtes Zeitintervall für die Bildaufnahme in dem optischen Sensorsystem vorgegeben. Die gesamte Intensität der in dem optischen Sensor empfangenen Lichtpulse in dem Zeitintervall wird mit dem Abstand korreliert.

Um die Messgenauigkeit zu erhöhen, kann vorgesehen sein, dass ein Bild, das nur mit dem Licht, das vom optischen Sensorsystem, insbesondere von dem Lichtmodul, emittiert wurde, generiert wird. So kann es sein, dass Erkennungsbilder und Vergleichsbilder aufgenommen und gegebenenfalls ausgewertet werden. Erkennungsbilder entstehen mit Hilfe der Reflexion des emittierten Lichts des Lichtmoduls. Vergleichsbilder entstehen nur mit Hilfe von Störlicht. Bei dem Störlicht kann es sich beispielsweise um Sonnenlicht oder um Licht einer künstlichen Lichtquelle, z. B. Garagenlicht, handeln. Zum Entstehen der Vergleichsbilder emittiert das Lichtmodul kein Licht. Die Überwachungseinheit kann durch Vergleich eines Erkennungsbildes und eines Vergleichsbildes das Störlicht erkennen. Das optische Sensorsystem, insbesondere die Überwachungseinheit, kann hierdurch ein modifiziertes Erkennungsbild generieren, aus dem das Störlicht entfernt ist. Es kann vorgesehen sein, dass jeweils nach einer vorgegebenen Anzahl von Erkennungsbildern ein Vergleichsbild aufgenommen wird.

Es kann sein, dass weitere Maßnahmen getroffen werden, damit der Benutzer das Kraftfahrzeug gefahrlos öffnen kann.

So ist es denkbar, dass der Betätigungsbereich nur eine vorgegebene Betätigungsdauer t_{B} lang überwacht wird. Eine maximale Länge der Betätigungsdauer t_{B} kann fest vorgegeben und in dem optischen Sensorsystem gespeichert sein. Abstände von Objekten, die sich außerhalb der Betätigungsdauer t_{B} im Betätigungsbereich aufhalten, werden nicht erfasst. Somit kann außerhalb der Betätigungsdauer t_{B} kein Arbeitssignal ausgelöst werden. Durch die Betätigungsdauer kann nur in einem beschränkten Zeitraum ein Arbeitssignal ausgelöst werden, so dass die Gefahr von Fehlauslösungen verringert wird. Die Betätigungsdauer t_{B} kann insbesondere gering gewählt sein. So kann t_{B} mit 3 s ≤ t_{B} ≤ 30 s, bevorzugt 5 s ≤ t_{B} ≤ 15 s gewählt sein. Die Betätigungsdauer t_{B} kann insbesondere durch den Erhalt des Signals, dass ein berechtigter Benutzer authentifiziert ist, gestartet werden und/oder direkt nach dem Erhalt dieses Signals beginnen. Die Betätigungsdauer kann nach Ablauf der maximalen Länge oder vorzeitig, z. B. mit dem Bereitstellen des Arbeitssignals oder mit dem Erfüllen der dafür nötigen Vorgabe(n), enden. Es kann vorgesehen sein, dass der Anfang und das Ende der Betätigungsdauer t_{B} für den Benutzer wahrnehmbar sind.

Vorzugsweise kann nur bei Erfüllung mindestens einer weiteren Vorgabe das Arbeitssignal bereitgestellt werden. Hierdurch wird ebenfalls die Sicherheit für den Benutzer erhöht.

So kann während der Überwachung zusätzlich zu Schritt b) die Größe des Objekts bestimmt werden. Nur wenn die Größe eine Mindestgröße überschreitet und/oder eine maximale Größe unterschreitet, kann das Arbeitssignal bereitgestellt werden.

Alternativ oder zusätzlich kann ein definierter Bewegungsablauf des Objekts im Betätigungsbereich vorgegeben sein. Nur wenn der definierte Bewegungsablauf erfolgt, wird das Arbeitssignal bereitgestellt. Bei dem definierten Bewegungsablauf kann es sich z. B. um eine vorgegebene Gestik handeln. Es kann sein, dass mehrere Messungen des Abstands des Objekts zum optischen Sensor durchgeführt werden, um den Bewegungsablauf im Betätigungsbereich erkennen zu können. Hierbei wird insbesondere der Abstand bei zumindest zwei aufeinanderfolgenden Bildern, insbesondere Erkennungsbildern, erfasst. Der Abstand kann durch eine Time of Flight Messung erfasst werden.

Denkbar ist, dass während der Überwachung die Aufenthaltsdauer des Objekts im Betätigungsbereich erfasst wird. Nur wenn die Aufenthaltsdauer eine Mindestaufenthaltsdauer überschreitet und/oder eine maximale Aufenthaltsdauer unterschreitet, kann das Arbeitssignal bereitgestellt werden.

Ebenfalls ist es möglich, dass ein Entfernen des Objekts innerhalb einer vorgegebenen Entfernungsdauer t_{E} aus dem Betätigungsbereich erfolgen muss, damit das Arbeitssignal bereitgestellt wird. So kann es vorgesehen sein, dass, wenn als Resultat des Schritts d) die Vorgabe erfüllt ist, die Entfernungsdauer t_{E} beginnt. Der Beginn der Entfernungsdauer t_{E} ist für den Benutzer wahrnehmbar. Nur wenn das Objekt, insbesondere ein Körperteil des Benutzers, innerhalb der Entfernungsdauer t_{E} aus dem Betätigungsbereich entfernt wird, wird das Arbeitssignal bereitgestellt.

Ebenfalls ist es denkbar, dass ein zweiter Betätigungsbereich vorhanden ist. Der zweite Betätigungsbereich kann ebenfalls durch das optische Sensorsystem überwacht werden. So ist es denkbar, dass ein Objekt sich im zweiten Betätigungsbereich aufhalten muss, insbesondere in dem zweiten Betätigungsbereich eine der bereits genannten Vorgaben erfüllt sein muss, damit das Arbeitssignal bereitgestellt wird.
Zusätzlich oder alternativ kann eine Mindestentfernung und/oder eine bestimmte Position des berechtigten Benutzers vom optischen Sensor und/oder vom Kraftfahrzeug notwendig sein, damit das Arbeitssignal bereitgestellt wird. Bezüglich der Position kann z. B. festgestellt werden, ob sich der Benutzer vor, neben oder hinter dem Kraftfahrzeug befindet. Die Mindestentfernung und/oder die Position kann zu jeder Zeit während oder nach der Authentifizierung bestimmt werden. Insbesondere kann die Mindestentfernung und/oder die Position auch nach Ende der Betätigungsdauer bestimmt werden. Die Entfernung des berechtigten Benutzers vom Kraftfahrzeug und/oder vom optischen Sensor und/oder die Position des berechtigten Benutzers wird erfasst. Hierbei kann die Entfernung des Benutzers vom Kraftfahrzeug und/oder eine Position des Benutzers, z. B. anhand der Stärke eines von einem ID-Geber ausgesendeten Signals, ermittelt werden. Beispielsweise kann der Receive Signal Strength Indicator (RSSI) hierzu verwendet werden. Durch die Ermittlung der Stärke des ausgesendeten Signals kann sichergestellt werden, dass nur der berechtigte Benutzer selber in den Detektionsbereich gelangt ist und seinen Benutzerwillen im Betätigungsbereich kundgetan hat. Es ist denkbar, den RSSI zyklisch abzufragen. Alternativ kann die Entfernung des Benutzers vom optischen Sensor durch das optische Sensorsystem ermittelt werden. Hierbei kann ein Detektionsbereich, der weiter entfernt als der Betätigungsbereich vom Kraftfahrzeug endet, von dem optischen Sensorsystem überwacht werden und die Entfernung des Benutzers zum optischen Sensor im Detektionsbereich erfasst werden. Nur wenn der Benutzer die Mindestentfernung vom Kraftfahrzeug und/oder vom optischen Sensor entfernt ist und/oder in einer vorgegebenen Position am Kraftfahrzeug steht, wird das Arbeitssignal ausgelöst.

Eine weitere Möglichkeit, die Sicherheit des Benutzers zu erhöhen, kann durch ein Warnsignal erreicht werden. So kann vor dem Auslösen des Arbeitssignals ein für den Benutzer wahrnehmbares Warnsignal abgegeben werden.

Können bei der Überwachung des Betätigungsbereichs verschiedene Benutzerwillen festgestellt werden, so können verschiedenen Bewegungsabläufen verschiedene Benutzerwillen zugeordnet werden. So kann z. B. mit dem Fuß in den Betätigungsbereich treten ein Öffnen der Heckklappe verursachen, während eine seitliche Bewegung einer Hand nahe dem optischen Sensor ein Ausfahren der Anhängerkupplung bewirkt.

Es ist denkbar, dass vor dem Schritt a) weitere Schritte ausgeführt werden. So kann zunächst ein außerhalb des Kraftfahrzeugs liegender Detektionsbereich durch das optische Sensorsystem überwacht werden und im Falle eines Erkennens des Benutzers im Detektionsbereich ein Signal für den Start einer Authentifizierungsüberprüfung zwischen einem ID-Geber und einem Zugangskontrollsystem des Kraftfahrzeuges ausgelöst werden. Danach kann eine Authentifizierungsüberprüfung durch das Authentifizierungssystem stattfinden. An diese Schritte können sich die Verfahrensschritte a) bis e) anschließen. Der Detektionsbereich wird insbesondere überwacht, um die Nähe eines Benutzers feststellen zu können. Durch die Überwachung des Detektionsbereichs und die Auslösung eines Startsignals für die Authentifizierungsüberprüfung kann insbesondere eine Passive-Keyless-Entry-Überprüfung eingeleitet werden. Hierbei muss der Benutzer nicht den ID-Geber betätigen, um die Authentifizierungsüberprüfung auszulösen. Die zusätzlichen Verfahrensschritte haben den Vorteil, dass mit demselben optischen Sensorsystem bzw. Authentifizierungssystem sowohl die Authentifizierungsüberprüfung eingeleitet bzw. durchgeführt werden kann, die auch die Verfahrensschritte a) bis e) durchführen. Das Erkennen eines Benutzers im Detektionsbereich kann an das Erfüllen bestimmter Kriterien wie Größe, Aufenthaltsdauer, Bewegung und/oder Bewegungsrichtung des Benutzers geknüpft sein.

Die Aufgabe der Erfindung wird auch gelöst durch ein Montagemodul für ein Kraftfahrzeug, mit einem optischen Sensorsystem, das geeignet ist,
a) ein Signal, dass ein berechtigter Benutzer authentifiziert ist, zu erhalten,
b) einen außerhalb des Kraftfahrzeuges liegenden Betätigungsbereich zu überwachen,
c) einen Abstand eines Objektes im Betätigungsbereich zu einem optischen Sensor des Sensorsystems zu erfassen,
d) den Abstand mit einer Vorgabe zu vergleichen,
e) ein Arbeitssignal bei Erfüllen der Vorgabe bereitzustellen.

Ebenfalls wird die Aufgabe durch ein erfindungsgemäßes Authentifizierungssystem mit einem erfindungsgemäßen Montagemodul, einem ID-Geber und einem Zugangskontrollsystem gelöst. Insbesondere ist das Montagemodul und/oder das Authentifizierungssystem geeignet, ein erfindungsgemäßes Verfahren auszuführen. Hierzu kann insbesondere das optische Sensorsystem eine Überwachungseinheit mit einem Prozessor und einem Speicher aufweisen, mit dessen Hilfe das erfindungsgemäße Verfahren ausführbar ist. Das erfindungsgemäße Verfahren kann in dem Speicher hinterlegt sein. Die optische Überwachungseinheit kann ferner dazu ausgebildet sein, Bilder auszuwerten, die vom optischen Sensor aufgenommen worden sind.

Ferner kann das optische Sensorsystem den optischen Sensor aufweisen, um Licht aus dem Betätigungsbereich zu empfangen. Der optische Sensor nimmt Bilder des Betätigungsbereichs auf. Hierzu kann der optische Sensor ein Linsensystem und/oder einen Bildsensor aufweisen. Der Bildsensor kann ein CMOS-Sensor und/oder ein LDPD-Sensor sein. Der LDPD-Sensor (Lateral Drift Field Photodetector) ist in der Druckschrift DE 10 2009 020 218 B3 beschrieben. Der LDPD-Sensor ist geeignet, besonders schnell ausgewertet zu werden.

Das optische Sensorsystem kann ein Lichtmodul zum Emittieren von Licht aufweisen. Das Licht dient dazu, den Betätigungsbereich entstehen zu lassen. Hierzu kann das Lichtmodul ein Linsensystem aufweisen. Es kann vorgesehen sein, dass das Lichtmodul Licht im nicht sichtbaren Bereich emittiert. Insbesondere kann es sich bei dem Licht um Infrarotstrahlen, insbesondere um nahe Infrarotstrahlen, handeln. Das Lichtmodul kann nur eine Lichtquelle aufweisen. Alternativ kann das Lichtmodul mehrere Lichtquellen aufweisen. Die Lichtquellen können um den optischen Sensor angeordnet sein. So können z. B. Lichtquellen links und rechts von dem optischen Sensor angeordnet sein. Alternativ können die Lichtquellen um den Umfang des optischen Sensors herum angeordnet sein. Bei dem Licht kann es sich um Laserlicht handeln. Das vom Lichtmodul emittierte Licht kann gepulst sein.

Es kann vorgesehen sein, dass der optische Sensor einen Infrarotfilter und/oder einen Polarisationsfilter aufweist. Hierdurch kann zumindest ein Teil eines Störlichtes herausgefiltert werden. Ebenfalls kann das Lichtmodul einen Polarisationsfilter aufweisen.

Das Montagemodul kann ein Befestigungselement, insbesondere eine Installationsplatte, aufweisen, um einzelne Elemente des optischen Sensorsystems, d. h. den optischen Sensor, das Lichtmodul und/oder die Überwachungseinheit zu befestigen. Alternativ oder zusätzlich kann das Montagemodul ein Gehäuse umfassen, das das optische Sensorsystem zumindest teilweise umgibt. Die Überwachungseinheit kann zusammen mit dem Zugangskontrollsystem ausgebildet sein. Insbesondere bei einem Lichtmodul mit mehreren Lichtquellen kann das Befestigungselement kugelabschnittsartig ausgebildet sein.

Es kann vorgesehen sein, dass optische Sensorsystem oder das gesamte Montagemodul zur Anordnung am Fahrzeugheck, z. B. hinter der Heckscheibe, in eine Griffleiste, in ein Emblem, in eine Rückleuchte, hinter ein Katzenauge, an einen Stoßfänger und/oder in einem Spalt zwischen zwei Komponenten, ausgebildet ist. Alternativ oder zusätzlich kann das Montagemodul geeignet sein, an einer Fahrzeugseite z. B. in einer B-Säule befestigt zu werden. Insbesondere kann das optische Sensorsystem oder das gesamte Montagemodul hinter einer von außen undurchsichtigen Schicht verdeckt sein, die jedoch für das Licht des optischen Sensorsystems lichtdurchlässig ist. So kann z. B. der Stoßfänger, an dem das optische Sensorsystem montiert ist, lackiert sein.

Bevorzugt ist das optische Sensorsystem derart am Kraftfahrzeug angeordnet, dass es wenig verschmutzt. Z. B. kann das optische Sensorsystem hinter der Heckscheibe im Wischbereich des Scheibenwischers oder an der Griffleiste angeordnet sein. Alternativ oder zusätzlich kann das Montagemodul eine Waschdüse aufweisen, mit der das optische Sensorsystem gesäubert werden kann. Die Waschdüse kann hierbei z. B. immer dann automatisch das optische Sensorsystem reinigen, wenn auch der Scheibenwischer der Front- und/oder Heckscheibe betätigt wird.

Das Montagemodul kann ein Anzeigeelement aufweisen, durch das sichtbares Licht emittierbar ist. Hierdurch kann zumindest ein Teil des Betätigungsbereichs für den Benutzer sichtbar gemacht werden. Insbesondere kann eine auf der Bodenfläche liegende Endfläche des Betätigungsbereichs sichtbar gemacht werden.

Zusätzlich oder alternativ kann das Anzeigeelement die Betätigungsdauer für den Benutzer sichtbar machen. So ist es denkbar, dass zu Beginn der Betätigungsdauer das Anzeigeelement angeschaltet wird. Hierbei kann das Anzeigeelement einen ersten Beleuchtungszustand einnehmen. Endet die Betätigungsdauer, so kann das Anzeigeelement ausgeschaltet werden. Alternativ kann das Anzeigeelement nach der Betätigungsdauer in einen zweiten Beleuchtungszustand wechseln, der als Warnsignal dient. Ebenfalls ist es denkbar, dass das Anzeigeelement einen dritten Beleuchtungszustand einnehmen kann, der die Entfernungsdauer signalisiert. In einem der Beleuchtungszustände, insbesondere in dem ersten Beleuchtungszustand, kann das Anzeigeelement Licht einer konstanten Helligkeit emittieren. In dem anderen Beleuchtungszustand oder in den anderen Beleuchtungszuständen, kann z. B. die Helligkeit sich periodisch ändern. Hierbei können unterschiedliche Beleuchtungszustände unterschiedlich lange Perioden aufweisen.

Die Intensität des emittierten sichtbaren Lichts des Anzeigeelementes kann von der Helligkeit des Umgebungslichts abhängen. Die Helligkeit des Umgebungslichts kann durch einen Helligkeitssensor ermittelt werden.

Vorzugsweise ist das Anzeigeelement nahe am optischen Sensor und/oder am Lichtmodul angeordnet. Hierdurch kann auch bei einer sich ändernden Bodenfläche der vom Anzeigeelement auf der Bodenfläche sichtbare Bereich mit der Endfläche des Betätigungsbereichs genügend übereinstimmen. Insbesondere beträgt der Abstand f des Anzeigeelements zum optischen Sensor und/oder Lichtmodul 1 cm ≤ f ≤ 10 cm, bevorzugt 1 cm ≤ f ≤ 3 cm.

Es ist denkbar, dass eine Endfläche des Betätigungsbereichs von geringeren räumlichen Ausmaßen als ein Körperteil, insbesondere eine Hand oder ein Fuß, des Benutzers ist. Hierdurch wird erreicht, dass bei der für den Benutzer vorgesehenen Handlung nur eine möglichst ebene Fläche, z. B. ein Vorderblatt eines Schuhs oder ein Handteller, in den Betätigungsbereich gelangt. Somit ist es einfacher, einen Abstand des Objekts zum optischen Sensor zu bestimmen.

Es ist möglich, dass der Bildsensor Pixel aufweist. Vorzugsweise wird der Betätigungsbereich mit nur einer geringen Anzahl von Pixeln auf dem Bildsensor dargestellt. Hierdurch können Produktions- und Betriebskosten gesenkt werden. So kann der Körperteil des Benutzers, insbesondere eine Hand oder ein Fuß, im Betätigungsbereich und/oder der Betätigungsbereich mit n Pixeln dargestellt werden, wobei insbesondere 2 ≤ n ≤ 10, bevorzugt n=2 beträgt. Vorzugsweise ist der Körperteil des Benutzers an jeder Stelle des Betätigungsbereichs zumindest mit der genannten Pixelanzahl darstellbar. Der Körperteil des Benutzers wird mit einer Pixelzahl größer 1 dargestellt, um das erfindungsgemäße Verfahren nicht durch einen fehlerhaften Pixel zu gefährden.

Zusätzlich kann das optische Sensorsystem geeignet sein, vor der Authentifizierung einen außerhalb des Kraftfahrzeugs liegenden Detektionsbereich zu überwachen und im Falle eines Erkennens des Benutzers im Detektionsbereich ein Signal für den Start einer Authentifizierungsüberprüfung zwischen einem ID-Geber und einem Zugangskontrollsystem des Kraftfahrzeuges auszulösen.

Der optische Sensor und/oder das Lichtmodul können dazu ausgebildet sein, sowohl zur Überwachung des Detektionsbereichs als auch zum Überwachen des Betätigungsbereichs eingesetzt zu werden. D. h., derselbe optische Sensor und/oder dasselbe Lichtmodul dienen zur Überwachung des Detektions- und des Betätigungsbereichs. Hierzu können der optische Sensor und/oder das Lichtmodul ein starres Linsensystem aufweisen. Insbesondere kann das Lichtmodul zur Überwachung des Detektionsbereiches das gleiche Licht bzgl. der Wellenlänge und/oder der Dauer eines Lichtpulses wie zur Überwachung des Betätigungsbereiches emittieren. Alternativ kann eine Überwachung des Detektionsbereichs und/oder des Betätigungsbereichs zunächst mit Licht einer längeren Wellenlänge erfolgen als das anschließende Überprüfen des Abstandes und/oder weiterer Anforderungen, die an das Erkennen eines Benutzers und/oder Benutzerwillens gestellt sind. So kann zunächst z. B. Licht einer Wellenlänge von 905 nm verwendet werden. Anschließend kann z. B. Licht einer Wellenlänge von 800 nm verwendet werden.

Das Montagemodul kann so ausgebildet sein, dass in einer Draufsicht der Detektionsbereich weiter entfernt vom Kraftfahrzeug als der Betätigungsbereich endet. Hierdurch wird sichergestellt, dass nach einer positiven Authentifizierung sich der Betätigungsbereich zwischen dem Benutzer und dem Kraftfahrzeug befindet. D. h., der Benutzer kann in der Regel seine Bewegungsrichtung beibehalten, um den Betätigungsbereich zu erreichen. In einer Draufsicht kann sich der Betätigungsbereich innerhalb des Detektionsbereiches befinden. Alternativ kann vorgesehen sein, dass in einer Draufsicht sich der Betätigungsbereich näher am Kraftfahrzeug als der Detektionsbereich befindet. Insbesondere kann sich der Betätigungsbereich an den Detektionsbereich anschließen.

Es kann vorgesehen sein, dass das Montagemodul und/oder Kraftfahrzeug zumindest ein Mittel aufweist, das es dem Benutzer erleichtert, den Benutzerwillen im Betätigungsbereich kund zu tun, so dass das Arbeitssignal ausgelöst wird.

So kann das Montagemodul ein Hinweissignal aussenden, dass die Betätigungsdauer in Kürze enden wird. Das Hinweissignal kann z. B. durch einen Wechsel des Beleuchtungszustands des Anzeigeelements beginnen. Das Hinweissignal kann einem anderen Beleuchtungszustand des Anzeigeelements entsprechen. Z. B. kann zum Ende der Betätigungsdauer das Anzeigeelement blinken. Das Mittel entspricht einer entsprechenden Verfahrensvorgabe in der Überwachungseinheit.

Ebenfalls kann es für den Benutzer zum Kundtun seines Benutzerwillens hilfreich sein, wenn der Benutzer zu dem Betätigungsbereich geleitet wird. Dieses ist insbesondere der Fall, wenn der Benutzer durch Tragen eines großen Gegenstandes die Endfläche des Betätigungsbereichs auf der Bodenfläche nicht wahrnehmen kann. Hierzu kann das Montagemodul und/oder das Kraftfahrzeug Mittel aufweisen, durch die für den Benutzer ein wahrnehmbares, insbesondere sichtbares, hörbares oder fühlbares, Signal erzeugt werden kann. So kann beispielsweise das Montagemodul Leuchtelemente, z. B. LEDs, aufweisen. Die Leuchtelemente können so angeordnet sein, dass die Leuchtelemente als Wegweiser wirken. Beispielsweise können die Leuchtelemente derart ausgerichtet sein, dass sie Markierungen auf der Bodenfläche erzeugen, die zum Betätigungsbereich hinführen. Zusätzlich oder alternativ können die Leuchtelemente nebeneinander angeordnet sein. Die Leuchtelemente können in einer Reihenfolge angeschaltet werden, die dem Benutzer zeigt, in welche Richtung der Benutzer sich auf den Betätigungsbereich zubewegen muss. Anstelle der Leuchtelemente können hierfür auch vorhandene, nebeneinander im Kraftfahrzeug angeordnete Lichtelemente, z. B. die Leuchtelemente eines Scheinwerfers, einer Bremsleuchte, Blinker oder dergleichen, verwendet werden. Ebenfalls ist es denkbar, dem Benutzer akustisch hörbar eine Anleitung zu geben, in welche Richtung der Benutzer sich bewegen muss. Hierzu kann das Montagemodul einen Lautsprecher aufweisen. Ebenfalls ist es denkbar, die Richtungsänderung dem ID-Geber mitzuteilen, der durch verschiedene Vibrationen dem Benutzer den Weg weist. Wird dem Benutzer eine Richtungsänderung mitgeteilt, so ermittelt das optische Sensorsystem die Position des Benutzers und die Richtung, in die er sich zu dem Betätigungsbereich bewegen muss, und veranlasst das wahrnehmbare Mittel, das entsprechende Signal auszusenden.

Ebenfalls kann es für den Benutzer hilfreich sein, dass die Position des Betätigungsbereichs und/oder die Länge der Betätigungsdauer veränderbar ist. Dieses ist insbesondere hilfreich, wenn ein körperlich beeinträchtigter Benutzer seinen Benutzerwillen kundtun möchte. Ebenfalls ist dieses hilfreich, wenn der Betätigungsbereich an einer für den Benutzer ungünstigen Position angeordnet ist. Die ungünstige Position kann hierbei dauerhaft sein. Z. B. kann der Betätigungsbereich auf einer Anhängerkupplung enden. Alternativ kann die ungünstige Position nur für ein Auslösen eines einmaligen Arbeitssignals ungünstig sein, z. B. weil der Betätigungsbereich an einer Pfütze endet. Um die Position des Betätigungsbereichs und/oder die Länge der Betätigungsdauer zu ändern, kann insbesondere eine vordefinierte Benutzerhandlung vorgesehen sein. So kann z. B. der Benutzer die Position des Betätigungsbereichs und/oder Länge der Betätigungsdauer durch eine Eingabe in einem Benutzermenü, z. B. eines KFZ-Steuergeräts oder eines ID-Gebers, ändern. Alternativ kann die vordefinierte Benutzerhandlung vom optischen Sensorsystem erkannt werden. In einer weiteren Alternative kann das Montagemodul in einen Lernmodus überführt werden, in dem das Montagemodul die geänderte Position des Betätigungsbereichs und/oder die geänderte Länge des Betätigungsbereichs lernt.

Ebenfalls kann es für den Benutzer hilfreich sein, dass der Betätigungsbereich erneut überwacht ist, um einen Benutzerwillen zum Auslösen eines Arbeitssignals festzustellen, nachdem eine erste Betätigungsdauer ohne Erkennen eines Benutzerwillens beendet ist. Dieses ist insbesondere hilfreich, wenn der Benutzer abgelenkt war und den Betätigungsbereich nicht rechtzeitig erreicht hat oder die falsche Gestik durchgeführt hat. Daher kann vorgesehen sein, dass der Betätigungsbereich mehrmals, insbesondere zweioder dreimal, hintereinander überwachbar ist. Das erneute Überwachen des Betätigungsbereichs kann automatisch eingeleitet werden. Alternativ kann eine vordefinierte Benutzerhandlung vorgesehen sein, um den Betätigungsbereich erneut für eine weitere Betätigungsdauer zu überwachen. Hierzu kann beispielsweise ein kapazitiver Sensor von dem Benutzer angesprochen werden. Alternativ kann es sich um eine vordefinierte Benutzerhandlung handeln, die vom optischen Sensorsystem erkannt wird.

Bei der vordefinierten Benutzerhandlung, die vom optischen Sensorsystem erkannt wird und die eine Änderung der Position des Betätigungsbereichs und/oder der Betätigungsdauer und/oder eine erneute Überwachung des Betätigungsbereichs zum Erkennen eines Benutzerwillens veranlasst, kann es sich beispielhaft um folgende Benutzerhandlungen handeln: eine vorgegebene Gestik innerhalb des Betätigungs- und/oder Detektionsbereichs, beispielsweise ein Hin- und Herbewegen eines Körperteils des Benutzers, ein Nicht-Entfernen des Körperteils, sofern ein Entfernen vorgesehen war, eine Bewegung des Benutzers in den Detektions- und/oder Betätigungsbereich und/oder aus dem Detektions-und/oder Betätigungsbereich. Insbesondere kann der Körperteil eine Hand oder ein Fuß sein. Insbesondere kann vorgesehen sein, dass der Benutzer den Detektionsbereich für eine vorgegebene Zeit verlässt und sich dann wieder in den Detektionsbereich begibt.

Wird der Betätigungsbereich erneut zum Feststellen eines Benutzerwillens überwacht, so zeigt auch das Anzeigeelement dieses an. Wird die Position des Betätigungsbereichs verändert, so zeigt das Anzeigeelement dieses an. Hierzu kann das Anzeigeelement mehrere Leuchtmittel, z. B. LEDs, aufweisen. Jeweils ein oder mehrere Leuchtmittel machen jeweils einen Betätigungsbereich zumindest teilweise sichtbar. Vorzugsweise liegt der Betätigungsbereich mit der geänderten Position innerhalb des Detektionsbereichs. Je nachdem welcher Betätigungsbereich überwacht wird, werden die entsprechenden Pixel ausgewertet.

Die Erfindung umfasst auch ein Authentifizierungssystem mit einem ID-Geber, einem Zugangskontrollsystem und einem erfindungsgemäßen Montagemodul. Hierbei kann das Montagemodul wie beschrieben und/oder beansprucht ausgebildet sein. Das Authentifizierungssystem ist geeignet, die Authentifizierungsüberprüfung für eine Zugangsberechtigung vorzunehmen. Nachdem das Montagemodul das Signal für die Authentifizierungsüberprüfung ausgelöst hat, kann die Authentifizierungsüberprüfung fortgesetzt werden. Z. B. kann das Zugangskontrollsystem ein Wecksignal an den ID-Geber senden. Daraufhin kann der ID-Geber einen Authentifizierungscode an das Zugangskontrollsystem senden. Das Zugangskontrollsystem kann den empfangenen Authentifizierungscode mit einem gespeicherten Code vergleichen. Insbesondere kann im Falle einer Übereinstimmung, d. h. im Falle einer erfolgreichen Authentifizierung, ein Signal ausgelöst werden. Hierbei kann es sich um ein Entriegelungssignal handeln. Alternativ handelt es sich um ein Signal zum Start der Überwachung des Betätigungsbereichs. Das Entriegelungssignal wird in diesem Fall erst ausgelöst, wenn zumindest ein weiteres Signal, insbesondere das Arbeitssignal, und/oder eine weitere Authentifizierung erfolgt ist. In einer weiteren Alternative umfasst das Arbeitssignal auch das Entriegelungssignal. Das Authentifizierungssystem kann ebenfalls dazu geeignet sein, eine Mindestentfernung des Benutzers zum Kraftfahrzeug zu bestimmen.

Weitere, die Erfindung verbessernde Maßnahmen ergeben sich aus der nachfolgenden Beschreibung zu den Ausführungsbeispielen der Erfindung, welche in den Figuren schematisch dargestellt sind. Sämtliche aus den Ansprüchen der Beschreibung oder Zeichnung der vorgegebenen Merkmale oder Vorteile einschließlich konstruktiver Einzelheiten, räumliche Anordnung und Verfahrensschritte können sowohl für sich als auch in den verschiedensten Kombinationen erfindungswesentlich sein. Es zeigen:
- Fig. 1: ein erstes erfindungsgemäßes Montagemodul und ein erstes erfindungsgemäßes Authentifizierungssystem,
- Fig. 2 bis Fig. 4: das Montagemodul und das Authentifizierungssystem aus Figur 1 in einer jeweils anderen Umgebung,
- Fig. 5: eine Draufsicht auf einen Ausschnitt aus Figur 1,
- Fig. 6: eine weitere Darstellung des Montagemoduls und des Authentifizierungssystems aus Figur 1,
- Fig. 7: ein zweites erfindungsgemäßes Montagemodul und ein zweites erfindungsgemäßes Authentifizierungssystem,
- Fig. 8: ein drittes erfindungsgemäßes Montagemodul und ein drittes erfindungsgemäßes Authentifizierungssystem,
- Fig. 9: ein viertes erfindungsgemäßes Montagemodul und ein viertes erfindungsgemäßes Authentifizierungssystem,
- Fig. 10: eine Draufsicht auf das Montagemodul aus Figur 8,
- Fig. 11: eine Ansicht auf einen Bildsensor aus Figur 10,
- Fig. 12: eine Darstellung der Strahlungsintensität über der Zeit und
- Fig. 13: ein erfindungsgemäßes Verfahren.

Elemente mit gleicher Funktion und Wirkungsweise sind in den Figuren mit denselben Bezugszeichen bezeichnet.

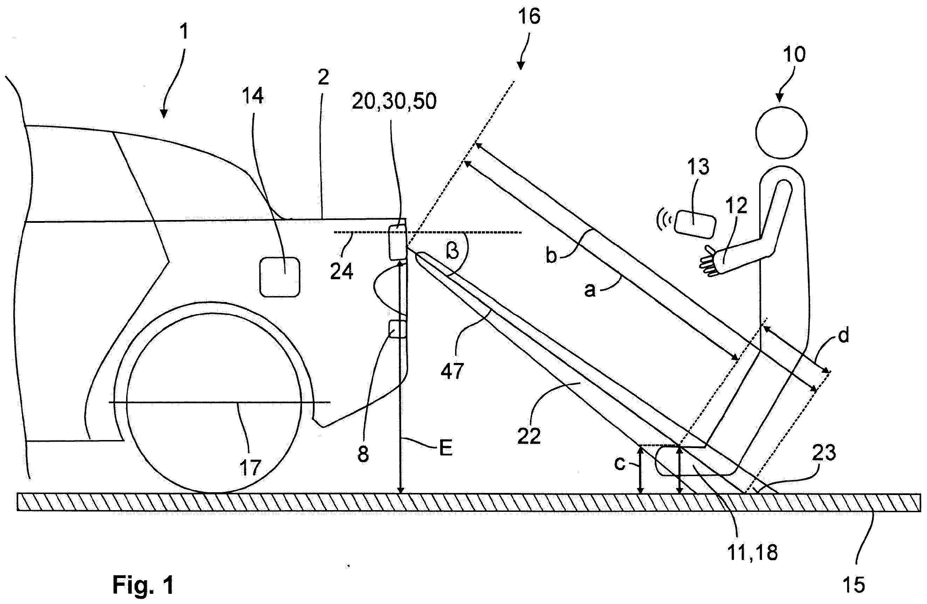

In Figur 1 ist ein erfindungsgemäßes Montagemodul 20 und ein erfindungsgemäßes Authentifizierungssystem 16 bei einem erfindungsgemäßen Kraftfahrzeug 1 eingesetzt worden. Hierbei ist der Einsatz in einem Heckbereich des Kraftfahrzeuges 1 mit einer Heckklappe 2 dargestellt. Ein optisches Sensorsystem 30 des Montagemoduls 20 ist im Bereich der Heckklappe 2, z. B. in einer Griffleiste der Heckklappe 2, angeordnet. Durch das optische Sensorsystem 30 wird ein außerhalb des Kraftfahrzeuges 1 liegender Betätigungsbereich 22 erzeugt. Das optische Sensorsystem 30 überwacht nach einer erfolgreichen Authentifizierungsüberprüfung den Betätigungsbereich 22. Zum Start der Überwachung erhält das optische Sensorsystem 30 ein Signal von einem Zugangskontrollsystem 14, dass ein berechtigter Benutzer authentifiziert ist. Hierzu hatte zuvor das Zugangskontrollsystem 14 ein Wecksignal an einen ID-Geber 13 und der ID-Geber 13 einen Authentifizierungscode an das Zugangskontrollsystem 14 gesendet.

Der Betätigungsbereich 22 erstreckt sich, einen schrägen Kegelstumpf aufweisend, von einer Nähe zum optischen Sensorsystem 30 zu einer Bodenfläche 15, auf der das Kraftfahrzeug 1 steht. An der Bodenfläche 15 endet der Betätigungsbereich 22 mit einer Endfläche 23. Der Betätigungsbereich 22 hat einen Neigungswinkel β zu einer Ebene 24, die parallel zur Bodenfläche 15 und/oder zu einer Ebene 17, die parallel zu einer die Fahrzeugachsen verbindenden Ebene verläuft.

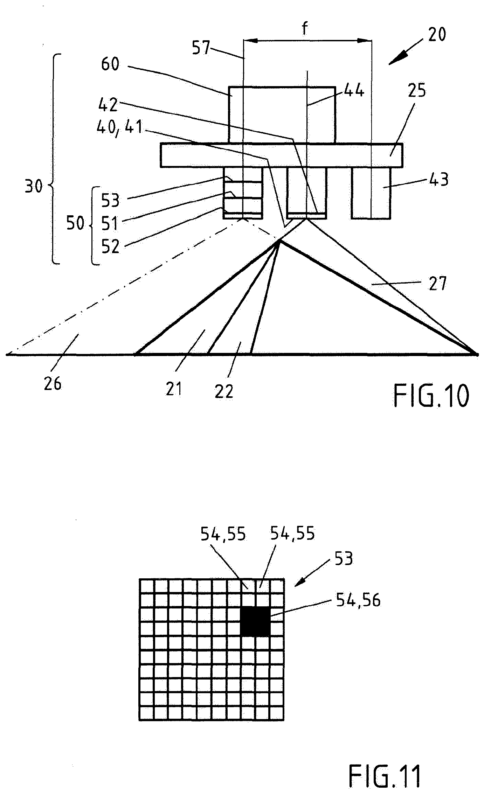

Befindet sich ein Objekt 18, in diesem Fall ein Fuß 11 eines Benutzers 10, in dem Betätigungsbereich 22, so wird der Abstand a des Objekts 18 zu einem optischen Sensor 50 des optischen Sensorsystems 30 erfasst. Hierzu sendet ein Lichtmodul 40 des optischen Sensorsystems 30 gepulstes, infrarotes Licht aus. Das Licht des Lichtmoduls wird am Objekt 18 reflektiert und von dem optischen Sensor 50 empfangen. In Figur 1 ist ein Lichtstrahl 47, der von einem Punkt des Objekts 18 oder der Endfläche 23 reflektiert und von einem Pixel 54 des optischen Sensors 50 empfangen wird, dargestellt. Der optische Sensor 50 wird von einer Überwachungseinheit 60 des optischen Sensorsystems 30 ausgewertet. Um den Abstand a zu bestimmen, kann eine Time-of-Flight Messung durchgeführt werden. Der optische Sensor 50, das Lichtmodul 40 und die Überwachungseinheit 60 sind in Figur 10 dargestellt.

Die Überwachungseinheit 60 vergleicht den erfassten Abstand a mit einer Vorgabe. Die Überwachungseinheit 60 stellt ein Arbeitssignal zum Öffnen der Heckklappe 2 nur bereit, wenn die Vorgabe erfüllt ist. Hierdurch ist eine Bedingung für das Bereitstellen des Arbeitssignals geschaffen worden, so dass nicht jedes Objekt 18 im Betätigungsbereich 22 das Arbeitssignal auslöst. Vielmehr muss ein Benutzerwille da sein, der das Objekt 18 so in den Betätigungsbereich 22 hält, dass die Vorgabe erfüllt wird und das Arbeitssignal bereitgestellt wird. Somit ist die Sicherheit für den Benutzer 10 erhöht. Hierbei ist vorgesehen, dass der Benutzer 10 seinen Fuß 11 in den Betätigungsbereich 22 bewegt, um seinen Benutzerwillen anzuzeigen. Beim Öffnen der Heckklappe 2 bewegt sich die Heckklappe 2 aus einem Türschloss 8.

In der Figur 1 sind verschiedene Möglichkeiten dargestellt, welche Vorgabe erfüllt sein kann. In einer ersten Möglichkeit der Vorgabe kann der Abstand a direkt mit einem in der Überwachungseinheit 60 hinterlegten Mindestabstand verglichen werden. Nur wenn der Abstand a den Mindestabstand überschreitet, wird die Vorgabe erfüllt.

In einer zweiten Möglichkeit der Vorgabe kann zunächst der Abstand b der Endfläche 23 zum optischen Sensor 50 erfasst werden, solange sich noch kein Objekt 18 in dem Betätigungsbereich 22 befindet. Ein Verhältnis des Abstands a zum Abstand b wird gebildet und der Wert dieses Verhältnisses mit einem in der Überwachungseinheit hinterlegten Mindestwert verglichen. Nur wenn der Wert des Verhältnisses des Abstands a zum Abstand b den Mindestwert überschreitet, wird die Vorgabe erfüllt.

In einer dritten Möglichkeit der Vorgabe kann die Differenz d der Abstände a und b gebildet werden. Durch die Differenz d wird eine Entfernung einer dem optischen Sensor 50 zugewandten Oberfläche 31 des Objekts 18 zur Endfläche 23 bezeichnet. Nur wenn die Differenz d eine maximale Entfernung unterschreitet, wird die Vorgabe erfüllt. Alternativ kann in einer vierten Möglichkeit der Vorgabe aus den Abständen a und b und dem Neigungswinkel β der Abstand c, der den Abstand einer dem optischen Sensor zugewandten Oberfläche zu der Endfläche 23 beschreibt, gebildet werden. Nur wenn der Abstand c einen maximalen Wert unterschreitet, wird die Vorgabe erfüllt.

Durch die oben genannten Vorgaben wird jeweils eine Mindestabstandsbedingung formuliert, durch die das Objekt dem optischen Sensor nicht zu nahe kommen darf. Somit löst ein Benutzer, der dem Kraftfahrzeug 1 zu nahe kommt, oder ein Hund 19 im Betätigungsbereich 22 das Arbeitssignal nicht aus.

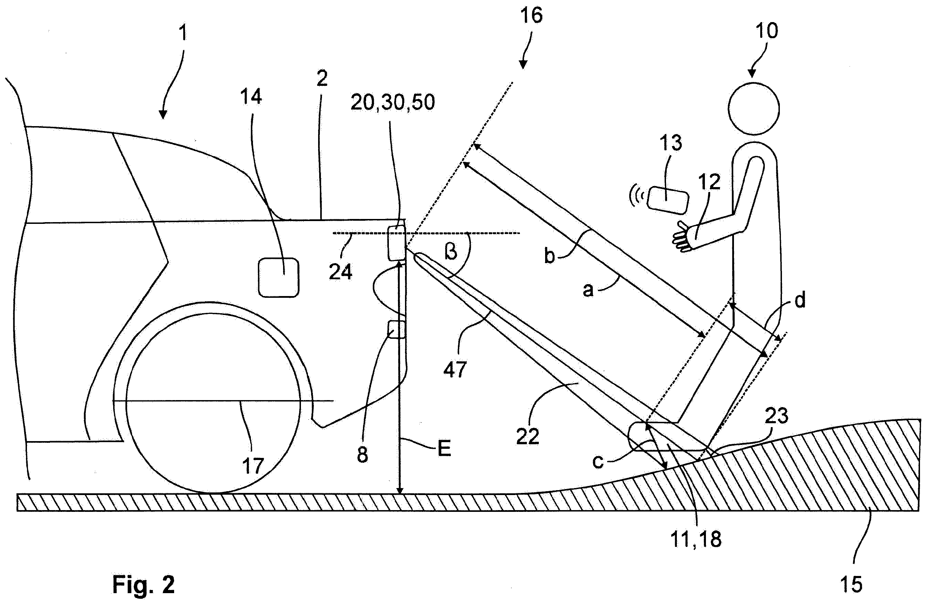

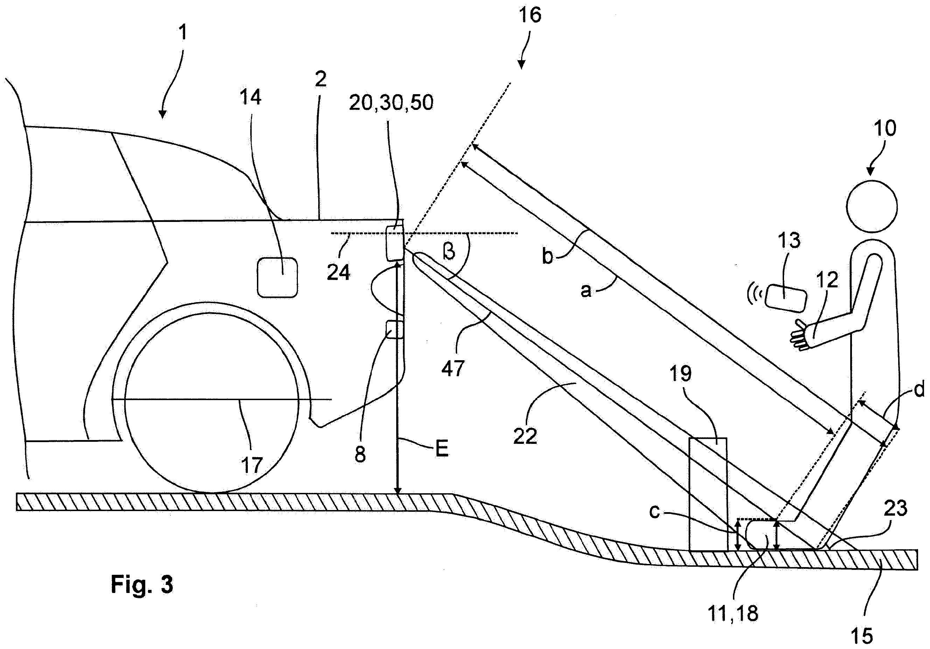

Während die erste Möglichkeit der Vorgabe keine Erfassung des Abstandes b benötigt und somit besonders einfach ist, wird durch die anderen Möglichkeiten der Vorgabe auch eine hügelige Bodenfläche 15 berücksichtigt. In Figur 2 ist dargestellt, wie die Bodenfläche 15 hinter dem Kraftfahrzeug 1 ansteigt. In Figur 3 senkt sich die Bodenfläche 15 hinter dem Kraftfahrzeug 1 ab. Dieses kann bei Garagenauffahrten häufig anzutreffen sein. In Figur 2 kann bei gleicher Höhe des Fußes 11 über der Bodenfläche 15 die erste Möglichkeit der Vorgabe nicht mehr erfüllt sein, während die zweite bis vierte Möglichkeit der Vorgabe erfüllt sind. In Figur 3 kann hingegen der Fuß 11 alle Möglichkeiten der Vorgabe erfüllen. Bei der zweiten bis vierten Möglichkeit der Vorgabe wird im Gegensatz zur ersten Vorgabe jedoch vermieden, dass ein Hund 19 die Vorgabe erfüllt.

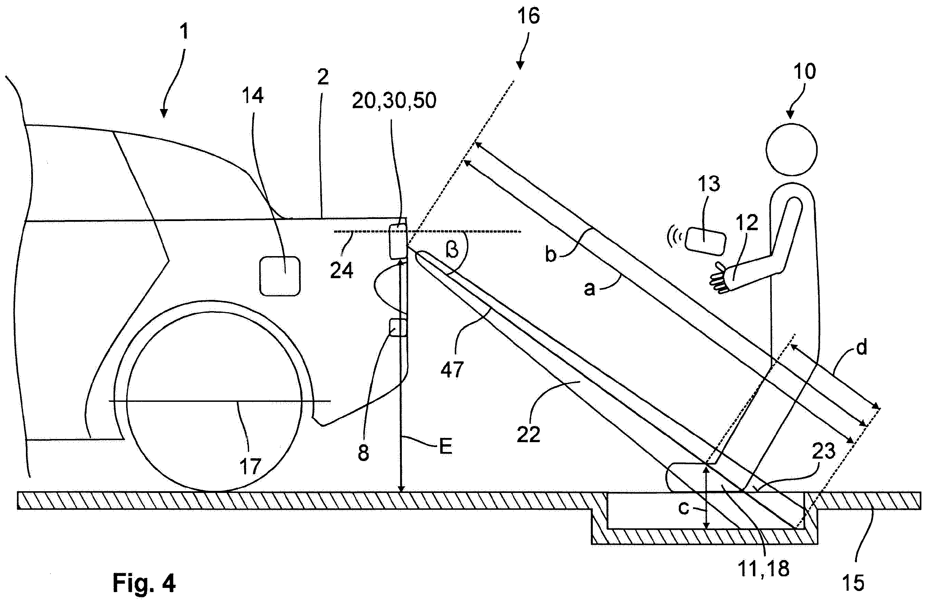

Generell wird davon ausgegangen, dass der Benutzer 10 auf die Endfläche 23 treten soll, um das Arbeitssignal auszulösen. Die Mindestabstandsbedingung kann aber so formuliert werden, dass der Benutzer bei einer Pfütze, wie in Figur 4 dargestellt, den Fuß über die Endfläche 23 halten und dennoch die Mindestabstandsbedingung erfüllen kann. So kann z. B. für den maximalen Abstand des Abstands c ein Wert von 30 cm gewählt werden. Entsprechende andere Mindestabstandsbedingungen sind entsprechend der Einbauhöhe E und/oder des Neigungswinkels β denkbar.

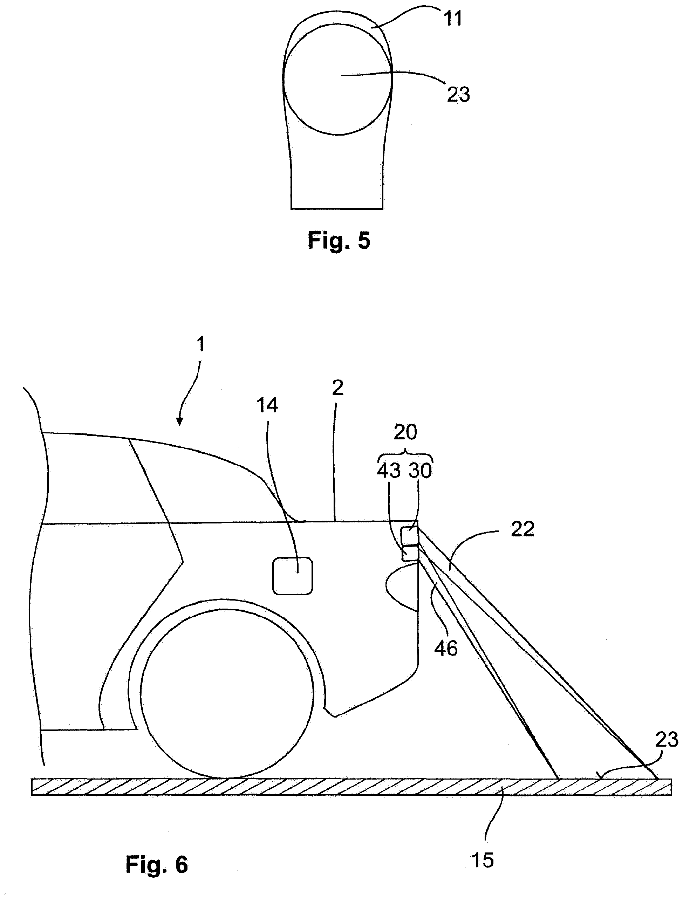

In Figur 5 ist die Größe der Endfläche 23 im Vergleich zu dem Fuß 11 dargestellt. Die Endfläche 23 hat geringere räumliche Ausmaße als der Fuß 11, so dass leicht ein aussagekräftiger mittlerer Abstand a des Fußes 11 zum optischen Sensor 50 erfasst werden kann.

In Figur 6 ist ein Anzeigeelement 43 des Montagemoduls 20 dargestellt. Dieses Anzeigeelement 43 ist auch in dem Montagemodul 20 der Figuren 1 bis 4 vorhanden, jedoch der Übersichtlichkeit wegen in den Figuren 1 bis 4 nicht dargestellt. Das Anzeigeelement 43 dient dazu, die Endfläche 23 des Betätigungsbereichs 22 für den Benutzer 10 sichtbar zu machen. Hierzu emittiert das Anzeigeelement 43 sichtbares Licht 46. Das Anzeigeelement 43 ist nahe am optischen Sensorsystem 30 angeordnet. Hierdurch ist es möglich, dass der vom Anzeigeelement 43 beleuchtete Bereich der Bodenfläche 15 auch dann mit dem Endbereich 23 genügend deckungsgleich ist, wenn die Bodenfläche 15 uneben ist.

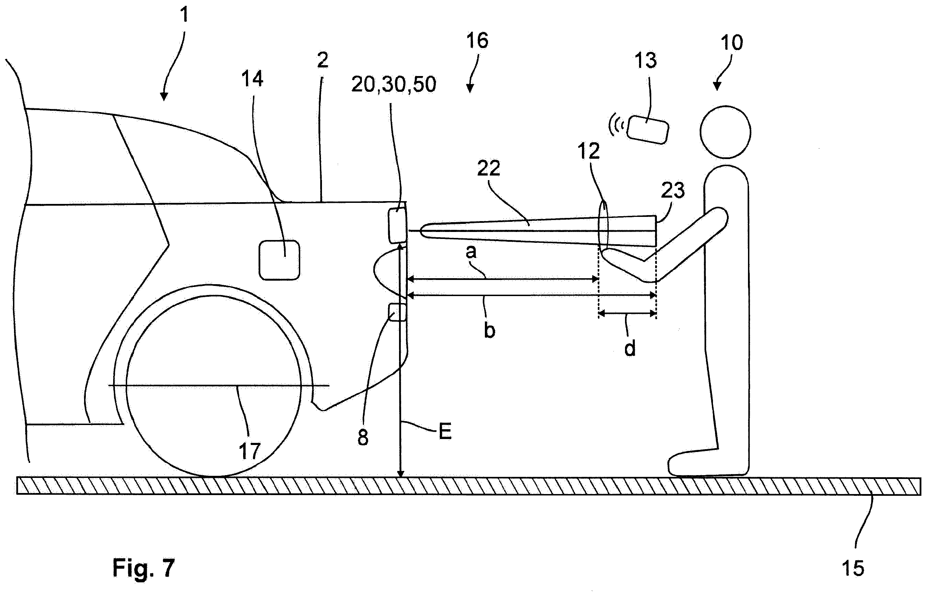

In Figur 7 ist ein zweites erfindungsgemäßes Montagemodul 20 dargestellt. Der Betätigungsbereich 22 endet hierbei vollständig über der Bodenfläche 15. Es ist vorgesehen, dass der berechtigte Benutzer 10 mit seiner Hand 12 so in den Betätigungsbereich 22 fasst, dass die Hand 12 die Mindestabstandsbedingung erfüllt und das Arbeitssignal bereitgestellt wird. Hierbei sind die erste bis dritte Möglichkeit für eine Mindestabstandsbedingung denkbar. Die Endfläche des Betätigungsbereichs 22 ist durch die nachlassende Intensität des vom Lichtmodul 40 emittierten Lichts gegeben. Das Anzeigeelement 43 macht nicht die Endfläche 23 des Betätigungsbereichs 22 sichtbar, sondern zeigt durch das Emittieren von sichtbarem Licht eine Betätigungsdauer t_{B} an, in der ein Objekt im Betätigungsbereich 22, das die Mindestabstandsbedingung erfüllt, das Arbeitssignal auslösen kann.

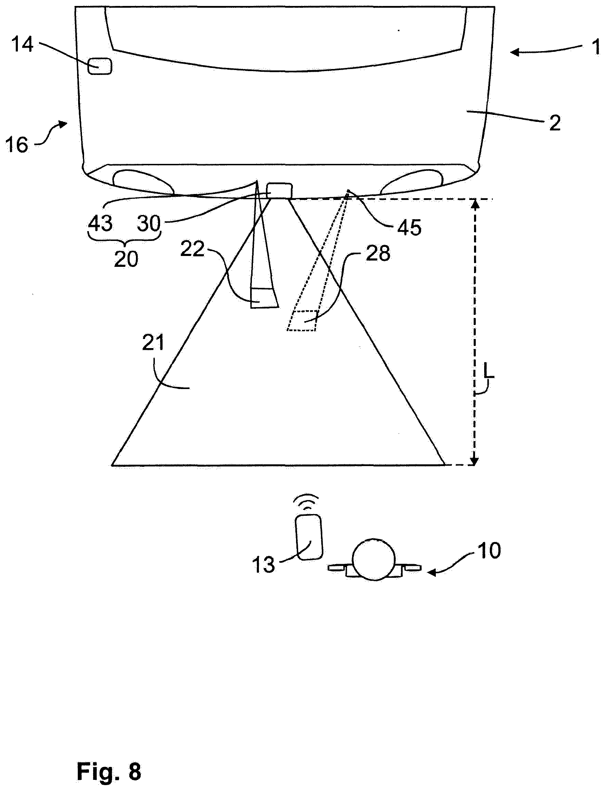

Figur 8 zeigt ein drittes Ausführungsbeispiel für ein erfindungsgemäßes Montagemodul 20 und ein erfindungsgemäßes Authentifizierungssystem 16. In Bezug auf die Anordnung des Montagemoduls 20 im Heckbereich und in Bezug auf die Funktion des Betätigungsbereichs 22 gelten die zu den Figuren 1 bis 6 gemachten Ausführungen. Das optische Sensorsystem 30 des Montagemoduls 20 der Figur 8 ist in der Lage, einen Detektionsbereich 21 zu überwachen. Der Detektionsbereich 21 wird von einem Abstellen des Kraftfahrzeuges 1 bis zu einer erfolgreichen Authentifizierung überwacht. Hierbei kann ein Benutzer 10 in dem Detektionsbereich 21 von dem optischen Sensorsystem 30 erkannt werden. Im Falle eines Erkennens des Benutzers 10 wird ein Signal zum Start einer Authentifizierungsüberprüfung ausgelöst. Die Authentifizierungsüberprüfung wird von dem Zugangskontrollsystem 14 und dem ID-Geber 13 selbstständig durchgeführt. Hierbei muss der Benutzer 10 nicht den ID-Geber 13 bedienen, so dass es sich um eine Passive-Entry-Überprüfung handelt. Bei einer erfolgreichen Authentifizierung erhält das optische Sensorsystem 30 ein Signal, dass der Benutzer erfolgreich authentifiziert ist. Hieraufhin überwacht das optische Sensorsystem 30 den Betätigungsbereich 22.

Der Detektionsbereich hat die Länge L. Der Betätigungsbereich 22 ist von geringeren räumlichen Ausmaßen als der Detektionsbereich 21 und liegt innerhalb des Detektionsbereichs 21. Der Betätigungsbereich 22 endet näher am Kraftfahrzeug 1 als der Detektionsbereich 21. Somit kann der Benutzer 10 seine Bewegungsrichtung beibehalten, wobei der Benutzer 10 zunächst authentifiziert wird. Dann kann der Benutzer 10 den Fuß 11 in den Betätigungsbereich 22 bewegen.

Es kann sein, dass der Betätigungsbereich 22 der einzige Betätigungsbereich ist. Optional und daher in Figur 1 gestrichelt dargestellt, ist zusätzlich ein zweiter Betätigungsbereich 28 dargestellt. In diesem Fall muss in beiden Betätigungsbereichen 22, 28 innerhalb einer vordefinierten Betätigungsdauer t_{B} ein Objekt 18 die Mindestabstandsbedingung erfüllen, um das Arbeitssignal bereitzustellen. Zum Sichtbarmachen des zweiten Betätigungsbereichs 28 dient ein zweites Anzeigeelement 45 des Montagemoduls 20.

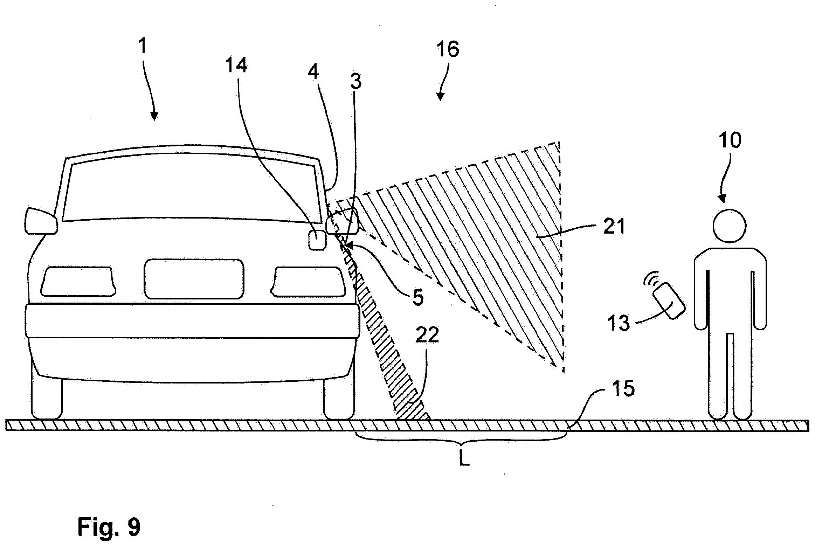

Figur 9 zeigt ein viertes Ausführungsbeispiel, wie das erfindungsgemäße Montagemodul 20 und das erfindungsgemäße Authentifizierungssystem 16 eingesetzt werden. Das Montagemodul 20 ist in der Figur 9 in einer B-Säule 4 einer Fahrzeugseite angeordnet. Durch den Detektionsbereich 21 wird eine Annäherung an eine Seitentür 3 des Kraftfahrzeuges 1 überwacht. Das Arbeitssignal kann zum Öffnen der Seitentür 3 dienen. Der Betätigungsbereich 22 endet näher am Kraftfahrzeug 1 als der Detektionsbereich 21. Der Betätigungsbereich 22 liegt außerhalb des Detektionsbereichs 21. Der Betätigungsbereich 22 des Ausführungsbeispiels der Figur 9 umfasst den Bereich des Türgriffes 5. Im Betätigungsbereich 22 erfüllt insbesondere eine Hand 12 des Benutzers 10, die sich in der Nähe des Türgriffs 5 befindet, die Mindestabstandsbedingung.

In der Figur 10 ist das dritte Ausführungsbeispiel eines erfindungsgemäßen Montagemoduls 20 in einer Draufsicht dargestellt. Das Montagemodul 20 weist eine Installationsplatte 25 als ein Befestigungselement, ein optisches Sensorsystem 30 und ein Anzeigenelement 43 auf. Das optische Sensorsystem 30 weist ein Lichtmodul 40 auf, das in Figur 10 als eine einzige Lichtquelle 41 ausgebildet ist. Die Lichtquelle 41 emittiert Infrarotlicht, wodurch ein Sendebereich 27 entsteht. Form und Gestalt des Sendebereiches 27 werden durch ein Linsensystem 42 der Lichtquelle 41, das nur schematisch dargestellt ist, erreicht. Das optische Sensorsystem 30 weist zudem einen optischen Sensor 50 auf, der aus einem Empfangsbereich 26 Licht empfangen kann. Form und Gestalt des Empfangsbereiches 26 werden durch ein schematisch dargestelltes Linsensystem 51 des optischen Sensors 50 vorgegeben. Der mit dicker Strichdicke dargestellte Detektionsbereich 21 ergibt sich durch die Überlagerung des Sendebereiches 27 mit dem Detektionsbereich 26. Der optische Sensor 50 weist einen Infrarotfilter 52 auf, um Licht anderer Wellenlängen zu filtern. Ferner weist der optische Sensor einen Bildsensor 53 auf, auf dem das Bild entsteht. Eine Überwachungseinheit 60 dient zur Auswertung des optischen Sensors 50. Der optische Sensor 50, das Lichtmodul 40 und die Überwachungseinheit 60 sind auf der Installationsplatte 25 befestigt. Die Linsensysteme 42, 51 sind starr.

Der Betätigungsbereich 22 liegt innerhalb des Detektionsbereichs 21. Dieses entspricht dem dritten Ausführungsbeispiel. Alternativ können in dem Bereich der Überlagerung des Sende-und Empfangsbereichs der Detektionsbereich 21 und der Betätigungsbereich 22 separat ausgebildet sein, so dass der Detektions- und der Betätigungsbereich 21, 22 wie in Figur 9 angeordnet sind. Das Anzeigeelement 43 weist einen geringen Abstand f zum optischen Sensor 50 auf.

Figur 11 zeigt eine Draufsicht auf einen Bildsensor 53 eines erfindungsgemäßen Montagemoduls 20, der eine Gesamtzahl an Pixel 54 aufweist. Dadurch, dass mit demselben Bildsensor 53 auch der Detektionsbereich 21 überwacht wird, werden nur wenige Pixel 54, insbesondere zwischen zwei und zehn Pixel 54 verwendet, um den Betätigungsbereich 22 auf dem Bildsensor 53 abzubilden. Beispielhaft bilden in Figur 11 vier Pixel 54 den Betätigungsbereich 22 ab. Während der Überwachung des Betätigungsbereichs 22 werden nur die dem Betätigungsbereich 22 zugeordneten Pixel 56 ausgewertet. Die übrigen Pixel entsprechen nicht ausgewerteten Pixeln 55.

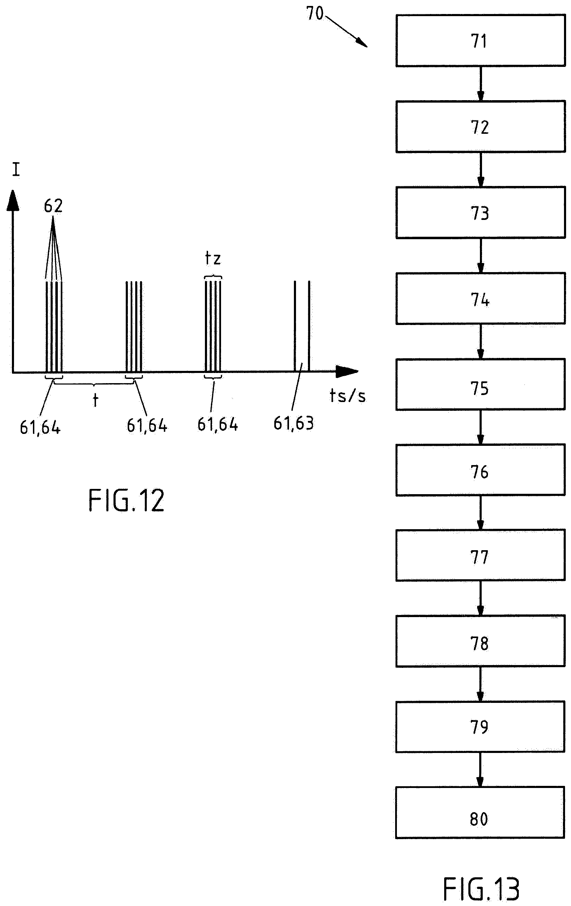

Figur 12 enthält eine Auftragung einer Lichtintensität I über der Zeit ts. Wie in Figur 12 dargestellt, wird mit Hilfe des Bildsensors 53 nach jeder Zeitspanne t ein Bild 61 aufgenommen, wobei in der Figur 12 jeweils ein Zeitintervall t_{z} dargestellt ist, das für ein Bild 61 benötigt wird. Hierbei kann es sich um ein Erkennungsbild 64 oder ein Vergleichsbild 63 handeln. Das Erkennungsbild 64 ist mit Hilfe von Lichtpulsen 62 des Lichtmoduls 40 aufgenommen worden. Hierbei ist eine Vielzahl von Lichtpulsen 62 notwendig, um ein Erkennungsbild 64 zu erzeugen. Die Lichtpulse 62 werden mit einer vorgegebenen Pulsfrequenz von dem Lichtmodul 40 emittiert. Das von dem Bildsensor 53 empfangene Licht der Lichtpulse 62 eines Bildes 61 wird aufintegriert oder aufsummiert, um das Erkennungsbild 64 zu erzeugen. Um eine Abstandserfassung durchzuführen, gibt das optische Sensorsystem 30 das Zeitintervall tz vor, in dem die Lichtpulse 62 ein Erkennungsbild 64 erzeugen. Der Abstand des Benutzers 10 zum optischen Sensor 50 wird in Abhängigkeit von der Intensität der Lichtpulse 62 im Zeitintervall tz bestimmt. In dem Vergleichsbild 63 wird ein Bild 61 aufgenommen, ohne dass Lichtpulse 62 des Lichtmoduls 40 den Bildsensor 53 erreichen. Hierzu emittiert das Lichtmodul 40 kein Licht.

In Figur 13 ist ein erfindungsgemäßes Verfahren dargestellt. Zunächst überwacht in einem ersten Schritt 71 das optische Sensorsystem 30 den Detektionsbereich 21. Befindet sich ein Benutzer 10 im Detektionsbereich 21 und erfüllt der Benutzer 10 die vorgegebenen Kriterien, so wird der Benutzer 10 erkannt. In diesem Fall wird in einem zweiten Schritt 72 ein Signal für die Authentifizierungsüberprüfung ausgelöst. In einem dritten Schritt 73 wird die Authentifizierungsüberprüfung durchgeführt. Hierbei wird durch das im Schritt 72 ausgelöste Signal das Zugangskontrollsystem 14 veranlasst, ein Wecksignal an den ID-Geber 13 zu senden. Anschließend übermittelt der ID-Geber 13 einen Authentifizierungscode an das Zugangskontrollsystem 14. Das Zugangskontrollsystem 14 vergleicht den Authentifizierungscode mit einem gespeicherten Code. Stimmen die beiden Codes überein, so ist die Authentifizierung erfolgreich und ein Entriegelungssignal wird ausgelöst. Hierbei kann es sich um ein Entriegelungssignal für alle Türen des Kraftfahrzeuges 1 handeln oder aber auch nur ein Entriegelungssignal für die Heckklappe 2 oder die Seitentür 3.

Nach der erfolgreichen Authentifizierung wird in einem vierten Schritt 74 ein Signal, dass der Benutzer 10 authentifiziert wurde, von dem optischen Sensorsystem 30 empfangen. In einem fünften Schritt 75 wird begonnen, den Betätigungsbereich 22 zu überwachen. Hierzu wird eine Betätigungsdauer gestartet. Ebenfalls beginnt das Anzeigeelement 43 sichtbares Licht in einem ersten Beleuchtungszustand zu emittieren, so dass dem Benutzer 10 die Endfläche 23 des Betätigungsbereichs 22 sichtbar gemacht wird. Zugleich sendet das Lichtmodul 40 gepulstes infrarotes Licht aus, um Abstandsmessungen durchführen zu können. Der optische Sensor 50 empfängt das Licht des Lichtmoduls 40, wodurch ein Erkennungsbild 64 entsteht. Zusätzlich werden Vergleichsbilder 63 aufgenommen und ausgewertet. Die Überwachungseinheit 60 wertet die erhaltenen Bilder 61 aus. Hierbei kann zunächst der Abstand b erfasst und gespeichert werden. Befindet sich ein Objekt 18 in dem Betätigungsbereich 22, so wird in einem Schritt 76 der Abstand a des Objekts 18 zum optischen Sensor 50 erfasst. Zumindest eine Mindestabstandsbedingung wird in einem Schritt 77 durch die Überwachungseinheit 60 überprüft. So kann z. B. der Abstand a mit dem in der Überwachungseinheit hinterlegten Mindestabstand verglichen werden und/oder die Differenz der Abstände b und a mit einer maximalen Entfernung. Nur wenn die Mindestabstandsbedingung erfüllt ist, wird in einem nächsten Schritt 78 das Anzeigeelement 43 in einen zweiten Beleuchtungszustand versetzt, in dem das Licht des Anzeigeelementes 43 periodisch seine Helligkeit ändert und somit blinkt. Zugleich wird eine Entfernungsdauer t_{E} gestartet. Wird das Objekt 18 innerhalb der Entfernungsdauer t_{E} aus dem Betätigungsbereich 22 entfernt, so wird in einem Schritt 79 die Überwachung des Betätigungsbereichs 22 beendet und das Anzeigeelement 43 in einen dritten Beleuchtungszustand versetzt, in dem das Anzeigeelement 43 ein Warnsignal an den Benutzer 10 bereitstellt. Danach wird nach einem fest vorgegebenen Zeitintervall in einem Schritt 80 das Arbeitssignal zum Öffnen der Heckklappe 2 bereitgestellt und das Anzeigeelement 43 ausgeschaltet.

Wird in der Betätigungsdauer t_{B} kein Objekt 18 in dem Betätigungsbereich 22 ermittelt und/oder wird in Betätigungsdauer t_{B} die Mindestabstandsbedingung nicht erfüllt und/oder wird in der Entfernungsdauer t_{E} nicht das Objekt 18 aus dem Betätigungsbereich 22 entfernt, so wird nach Ende der Betätigungsdauer t_{B} die Überwachung des Betätigungsbereichs 22 eingestellt. Dieses wird dadurch angezeigt, dass das Anzeigeelement 43 kein Licht mehr emittiert.

Insbesondere die Schritte 71 bis 73 und 78 bis 79 sind optional. Insbesondere kann alternativ direkt nach dem Schritt 77 direkt das Arbeitssignal bereitgestellt werden. Der Schritt 74 entspricht dem Verfahrensschritt a, die Schritte 75 bis 78 entsprechen dem Verfahrensschritt b, der Schritt 76 dem Verfahrensschritt c, der Schritt 77 dem Verfahrensschritt d und der Schritt 80 enthält den Verfahrensschritt e.

### Bezugszeichenliste

- 1: Kraftfahrzeug
- 2: Heckklappe (bewegliches Teil)
- 3: Seitentür (bewegliches Teil)
- 4: B-Säule
- 5: Türgriff
- 8: Türschloss

- 10: Benutzer
- 11: Fuß
- 12: Hand
- 13: ID-Geber
- 14: Zugangskontrollsystem
- 15: Bodenfläche
- 16: Authentifizierungssystem
- 17: Ebene
- 18: Objekt
- 19: Hund

- 20: Montagemodul
- 21: Detektionsbereich
- 22: erster Betätigungsbereich
- 23: Endfläche
- 24: Ebene
- 25: Befestigungselement
- 26: Empfangsbereich
- 27: Sendebereich
- 28: zweiter Betätigungsbereich

- 30: Optisches Sensorsystem
- 31: Oberfläche von 11
- 40: Lichtmodul
- 41: Lichtquelle von 30
- 42: Linsensystem für 30
- 43: erstes Anzeigeelement
- 44: optische Achse von 41
- 45: zweites Anzeigeelement
- 46: Licht von 43
- 47: reflektierter Lichtstrahl

- 50: optischer Sensor
- 51: Linsensystem von 50
- 52: IR-Filter
- 53: Bildsensor
- 54: Pixel
- 55: nicht ausgewertete Pixel
- 56: ausgewertete Pixel
- 57: optische Achse von 50
- 60: Überwachungseinheit
- 61: Bild
- 62: Lichtpuls
- 63: Vergleichsbild
- 64: Erkennungsbild

- 70: Verfahren
- 71: Verfahrensschritt
- 72: Verfahrensschritt
- 73: Verfahrensschritt
- 74: Verfahrensschritt
- 75: Verfahrensschritt
- 76: Verfahrensschritt
- 77: Verfahrensschritt
- 78: Verfahrensschritt
- 79: Verfahrensschritt
- 80: Verfahrensschritt

- β: Neigungswinkel
- E: Einbauhöhe
- L: Länge von 21

- a: Abstand von 18 zu 50
- b: Abstand von 23 zu 50
- c: Abstand von 31 zu 23
- d: Entfernung von 31 zu 23
- f: Abstand von 43 zu 50

## Patentansprüche

1. Verfahren (70) zur Bereitstellung eines Arbeitssignals für ein Kraftfahrzeug (1),
mit folgenden Schritten:
a) Erhalt eines Signals, dass ein berechtigter Benutzer (10) authentifiziert ist,
b) Überwachung eines außerhalb des Kraftfahrzeugs (1) liegenden Betätigungsbereichs (22) durch ein optisches Sensorsystem (30),
c) Erfassung eines Abstandes (a) eines Objektes (18) im Betätigungsbereich (22) zu einem optischen Sensor (50) durch das optischen Sensorsystem (30),
d) Vergleich des Abstandes (a) mit einer Vorgabe durch das optische Sensorsystem (30),
e) Bereitstellen eines Arbeitssignals bei Erfüllung der Vorgabe,
wobei das Arbeitssignal ein Signal zum Entriegeln und/oder Verriegeln und/oder Öffnen und/oder Schließen eines beweglichen Teils (2, 3) des Kraftfahrzeuges (1) ist.

2. Verfahren (70) nach Anspruch 1,
**dadurch gekennzeichnet,**
**dass** das bewegliche Teil (2, 3) eine Heckklappe (2) oder eine Seitentür (3) und/oder eine Schiebetür ist.

3. Verfahren (70) nach Anspruch 1 oder 2,
**dadurch gekennzeichnet,**
**dass** die Vorgabe einer Mindestabstandsbedingung des Abstandes (a) des Objekts (18) zum optischen Sensor (50) entspricht,
und/oder dass die Vorgabe einem fest vorgegebenen und in dem optischen Sensorsystem (30) hinterlegten Mindestabstand des Objekts (18) zum optischen Sensor (50) entspricht.

4. Verfahren (70) nach einem der vorhergehenden Ansprüche,
**dadurch gekennzeichnet,**
**dass** die Vorgabe einem Mindestwert für ein Verhältnis des Abstands (a) des Objektes (18) zum optischen Sensor (50) zu einem Abstand (b) einer Endfläche (23) des Betätigungsbereichs (22) zum optischen Sensor (50) entspricht, wobei sich die Endfläche (23) insbesondere an einer Bodenfläche (15), auf der das Kraftfahrzeug (1) steht, befindet,
und/oder
**dass** die Vorgabe einer fest vorgegebenen und in dem optischen Sensorsystem (30) hinterlegten maximalen Entfernung (d) einer dem optischen Sensor (50) zugewandten Oberfläche (31) des Objektes (18) zur Endfläche (23) des Betätigungsbereichs (22), die sich insbesondere an der Bodenfläche (15) befindet, entspricht.

5. Verfahren (70) nach einem der vorhergehenden Ansprüche,
**dadurch gekennzeichnet,**
**dass** das optische Sensorsystem (30) mehrere Lichtpulse (62) nacheinander emittiert, ein Zeitintervall (tz) zum Empfang der Lichtpulse (62) durch das optische Sensorsystem (30) vorgegeben ist und über die Intensität der in dem Zeitintervall (t_{Z}) empfangenen Lichtpulse (62) der Abstand (a) in Schritt c) erfasst wird.

6. Verfahren (70) nach einem der vorhergehenden Ansprüche,
**dadurch gekennzeichnet,**
**dass** im Schritt b) Erkennungsbilder (64), die mit Hilfe des reflektierten Lichts des Lichtmoduls (40) entstanden sind, und Vergleichsbilder (63), die ohne das reflektierte Licht des Lichtmoduls (40) mit Hilfe von Störlicht entstanden sind, aufgenommen und so ausgewertet werden, dass ein modifiziertes Erkennungsbild generiert wird, aus dem das Störlicht entfernt ist.

7. Verfahren (70) nach einem der vorhergehenden Ansprüche,
**dadurch gekennzeichnet,**
**dass** der Betätigungsbereich (22) nur eine vorgegebene Betätigungsdauer (t_{B}) lang überwacht wird,
und/oder dass nur bei Erfüllung zumindest einer weiteren Vorgabe, insbesondere einer Größe des Objekts (18), einer Aufenthaltsdauer des Objekts (18) im Betätigungsbereich (22), eines definierten Bewegungsablaufs des Objekts (18) im Betätigungsbereich (22) und/oder eines Entfernen des Objekts (18) innerhalb einer vorgegebenen Entfernungsdauer (t_{E}) aus dem Betätigungsbereich (22) das Arbeitssignal bereitgestellt wird,
und/oder dass vor dem Auslösen des Arbeitssignals ein für den Benutzer (10) wahrnehmbares Warnsignal abgegeben wird.

8. Montagemodul (20) für ein Kraftfahrzeug (1), mit
einem optischen Sensorsystem (30), das geeignet ist,
a) ein Signal, dass ein berechtigter Benutzer authentifiziert ist, zu erhalten,
b) einen außerhalb des Kraftfahrzeuges (1) liegenden Betätigungsbereich (22) zu überwachen,
c) einen Abstand (a) eines Objektes (18) im Betätigungsbereich (22) zu einem optischen Sensor (50) des Sensorsystems (30) zu erfassen,
d) den Abstand (a) mit einer Vorgabe zu vergleichen,
e) ein Arbeitssignal bei Erfüllen der Vorgabe bereitzustellen,
wobei das Arbeitssignal ein Signal zum Entriegeln und/oder Verriegeln und/oder Öffnen und/oder Schließen eines beweglichen Teils (2, 3) des Kraftfahrzeuges (1) ist,
wobei insbesondere ein Verfahren (70) nach einem der Ansprüche 1 bis 7 durch das Montagemodul (20) ausführbar ist.

9. Montagemodul (20) nach Anspruch 8,
**dadurch gekennzeichnet,**
**dass** das optische Sensorsystem (30) eine Überwachungseinheit (60) aufweist, die dazu ausgebildet ist, Bilder (61) auszuwerten, die vom optischen Sensor (50) aufgenommen worden sind, und/oder
**dass** das optische Sensorsystem (30) den optischen Sensor (50) aufweist, um Licht aus dem Betätigungsbereich (21) zu empfangen, und das optische Sensorsystem (30) ein Lichtmodul (40) mit mindestens einer Lichtquelle (41) zum Emittieren von Licht aufweist, wobei insbesondere die Lichtquelle (41) dazu ausgebildet ist, Licht im nicht sichtbaren Bereich zu emittieren.

10. Montagemodul (20) nach einem der vorhergehenden Ansprüche,
**dadurch gekennzeichnet,**
**dass** das Montagemodul (20) ein Anzeigeelement (43) aufweist, durch das sichtbares Licht emittierbar ist, um zumindest einen Teil des Betätigungsbereichs (22) und/oder die Betätigungsdauer (t_{B}) für den Benutzer (10) sichtbar zu machen,
wobei insbesondere das Anzeigeelement (43) dazu ausgebildet ist, eine Endfläche (23) des Betätigungsbereichs (22) auf einer Bodenfläche (15), auf der das Kraftfahrzeug (1) steht, sichtbar zu machen.

11. Montagemodul (20) nach einem der vorhergehenden Ansprüche,
**dadurch gekennzeichnet,**
**dass** die Endfläche (23) des Betätigungsbereichs (22) von geringeren räumlichen Ausmaßen ist als ein Körperteil, insbesondere eine Hand (12) oder ein Fuß (11), des Benutzers (10), und/oder
**dass** der optische Sensor (50) einen Bildsensor (53) mit Pixeln (54) aufweist, wobei der Körperteil (11, 12) des Benutzers (10) im Betätigungsbereich (22) und/oder der Betätigungsbereich (22) mit n Pixeln (54) darstellbar ist, wobei insbesondere 2 ≤ n ≤ 10, bevorzugt n=2 beträgt.

12. Montagemodul (20) nach einem der vorhergehenden Ansprüche,
**dadurch gekennzeichnet,**
**dass** das optische Sensorsystem (30) geeignet ist,
vor der Authentifizierung einen außerhalb des Kraftfahrzeugs (1) liegenden Detektionsbereich (21) zu überwachen und im Falle eines Erkennens des Benutzers (10) im Detektionsbereich (21) ein Signal für den Start einer Authentifizierungsüberprüfung zwischen einem ID-Geber (13) und einem Zugangskontrollsystem (14) des Kraftfahrzeuges (1) auszulösen.

13. Montagemodul (20) nach einem der vorhergehenden Ansprüche,
**dadurch gekennzeichnet,**
**dass** der optische Sensor (50) und/oder das Lichtmodul (40) dazu ausgebildet sind, sowohl zur Überwachung des Detektionsbereichs (21) als auch zum Überwachen des Betätigungsbereichs (22) eingesetzt zu werden.

14. Montagemodul (20) nach einem der vorhergehenden Ansprüche,
**dadurch gekennzeichnet,**
**dass** der optische Sensor (50) und/oder das Lichtmodul (40) ein starres Linsensystem (42, 51) aufweisen.

15. Authentifizierungssystem (16) mit einem Zugangskontrollsystem (14), einem ID-Geber (13) und einem Montagemodul (20) nach einem der vorhergehenden Ansprüche.

## Claims

1. A method (70) for providing an operating signal to a motor vehicle (1),
with the following steps:
a) receiving a signal that an authorized user (10) is authenticated,
b) monitoring of an operating area (22) outside the motor vehicle (1) by an optical sensor system (30),
c) detecting a distance (a) of an object (18) in the operating area (22) to an optical sensor (50) by the optical sensor system (30),
d) comparing of the distance (a) with a preset by the optical sensor system (30),
e) providing an operating signal when the preset is met,
wherein the operating signal is a signal for unlocking and/or locking and/or opening and/or closing a movable part (2, 3) of the motor vehicle (1).

2. The method (70) according to claim 1,
**characterized in**
**that** the movable part (2, 3) is a tailgate (2) or a side door (3) and/or a sliding door.

3. Method (70) according to claim 1 or 2,
**characterized in**
**that** the preset corresponds to minimum distance condition of the distance (a) of the object (18) to the optical sensor (50),
and/or in that the preset corresponds to a fixedly predetermined minimum distance of the object (18) from the optical sensor (50), which distance is stored in the optical sensor system (30).

4. Method (70) according to any one of the preceding claims,
**characterized in**
**that** the preset corresponds to a minimum value for a ratio of the distance (a) of the object (18) to the optical sensor (50) to a distance (b) of an end surface (23) of the operating area (22) to the optical sensor (50), the end surface (23) being located in particular on a floor surface (15) on which the motor vehicle (1) is standing,
and/or
in that the preset corresponds to a fixedly predetermined maximum distance (d), stored in the optical sensor system (30), of a surface (31) of the object (18) facing the optical sensor (50) from the end surface (23) of the operating area (22), which is located in particular on the floor surface (15).

5. Method (70) according to any one of the preceding claims,
**characterized in**
**that** the optical sensor system (30) emits a plurality of light pulses (62) in succession, a time interval (tz) for receiving the light pulses (62) by the optical sensor system (30) is predetermined, and the distance (a) in step c) is detected via the intensity of the light pulses (62) received in the time interval (tz).

6. Method (70) according to any one of the preceding claims,
**characterized in**
**that**, in step b), recognition images (64) which have been produced with the aid of the reflected light of the light module (40) and comparison images (63) which have been produced without the reflected light of the light module (40) with the aid of interfering light are recorded and evaluated in such a way that a modified recognition image is generated from which the interfering light has been removed.

7. Method (70) according to any one of the preceding claims,
**characterized in**
**that** the operating area (22) is only monitored for a predetermined actuating period (t_{B}), and/or in that the operating signal is provided only when at least one further preset is fulfilled, in particular a size of the object (18), a residence time of the object (18) in the operating area (22), a defined movement sequence of the object (18) in the operating area (22) and/or removal of the object (18) within a predetermined distance duration (t_{E}) from the operating area (22),
and/or in that a warning signal perceptible to the user (10) is emitted before the operating signal is triggered.

8. Assembly module (20) for a motor vehicle (1), with
an optical sensor system (30), which is suitable,
a) to receive a signal that an authorized user has been authenticated,
b) to monitor an operating area (22) external to the motor vehicle (1),
c) to detect a distance (a) of an object (18) in the operating area (22) to an optical sensor (50) of the sensor system (30),
d) to compare the distance (a) with a preset,
e) to provide an operating signal when the preset is met,
wherein the operating signal is a signal for unlocking and/or locking and/or opening and/or closing a movable part (2, 3) of the motor vehicle (1),
wherein, in particular, a method (70) according to any one of claims 1 to 7 is executable by the assembly module (20).

9. Assembly module (20) according to claim 8,
**characterized in**
**that** the optical sensor system (30) has a monitoring unit (60) which is designed to evaluate images (61) which have been recorded by the optical sensor (50), and/or
in that the optical sensor system (30) has the optical sensor (50) for receiving light from the operating area (22), and the optical sensor system (30) has a light module (40) with at least one light source (41) for emitting light, the light source (41) in particular being designed to emit light in the non-visible range.

10. Assembly module (20) according to any one of the preceding claims,
**characterized in**
**that** the assembly module (20) has a display element (43) through which visible light can be emitted in order to make at least part of the operating area (22) and/or the actuating period (t_{B}) visible to the user (10),
wherein in particular the display element (43) is adapted to make visible an end surface (23) of the operating area (22) on a ground surface (15) on which the motor vehicle (1) is standing.

11. Assembly module (20) according to any one of the preceding claims,
**characterized in**
**that** the end surface (23) of the operating area (22) is of smaller spatial dimensions than a body part, in particular a hand (12) or a foot (11), of the user (10), and/or
in that the optical sensor (50) has an image sensor (53) with pixels (54), it being possible for the body part (11, 12) of the user (10) in the actuation region (22) and/or the actuation region (22) to be represented with n pixels (54), in particular 2 ≤ n ≤ 10, preferably n=2.

12. Assembly module (20) according to any one of the preceding claims,
**characterized in**
**that** the optical sensor system (30) is suitable,
to monitor a detection area (21) outside the motor vehicle (1) before authentication and, in the event of detection of the user (10) in the detection area (21), to trigger a signal for the start of an authentication check between an ID transmitter (13) and an access control system (14) of the motor vehicle (1).

13. Assembly module (20) according to any one of the preceding claims,
**characterized in**
**that** the optical sensor (50) and/or the light module (40) are designed to be used both for monitoring the detection area (21) and for monitoring the actuation area (22).

14. Assembly module (20) according to any one of the preceding claims,
**characterized in**
**that** the optical sensor (50) and/or the light module (40) have a rigid lens system (42, 51).

15. Authentication system (16) comprising an access control system (14), an ID transmitter (13) and an assembly module (20) according to any one of the preceding claims.

## Revendications

1. Procédé (70) pour fournir un signal de fonctionnement pour un véhicule automobile (1), comprenant les étapes suivantes :
a) réception d'un signal indiquant qu'un utilisateur autorisé (10) est authentifié,
b) surveillance d'une zone d'actionnement (22) à l'extérieur du véhicule automobile (1) par un système de capteurs optiques (30),
c) détection d'une distance (a) d'un objet (18) dans la zone d'actionnement (22) par rapport à un capteur optique (50) par le système de capteur optique (30),
d) comparaison de la distance (a) avec une exigence par le système de capteur optique (30),
e) fourniture d'un signal de fonctionnement lorsque l'exigence est atteint,
dans lequel le signal de fonctionnement est un signal pour déverrouiller et/ou verrouiller et/ou ouvrir et/ou fermer une partie mobile (2, 3) du véhicule automobile (1).

2. Procédé (70) selon la revendication 1,
**caractérise en ce**
**que** la partie mobile (2, 3) est un hayon (2) ou une porte latérale (3) et/ou une porte coulissante.

3. Procédé (70) selon la revendication 1 ou 2,
**caractérise en ce**
**que** l'exigence correspond à une condition de distance minimale de la distance (a) de l'objet (18) au capteur optique (50),
et/ou que l'exigence correspond à une distance minimale fixe de l'objet (18) par rapport au capteur optique (50) stocké dans le système de capteur optique (30).

4. Procédé selon l'une des revendications précédentes,
**caractérise en ce**
**que** l'exigence correspond à une valeur minimale pour un rapport entre la distance (a) de l'objet (18) au capteur optique (50) et une distance (b) d'une surface d'extrémité (23) de la zone d'actionnement (22) au capteur optique (50), la surface d'extrémité (23) se trouvant notamment sur une surface de plancher (15) sur laquelle se trouve le véhicule automobile (1),
et/ou
en ce que l'exigence correspond à une distance maximale (d) prédéterminée de manière fixe, mémorisée dans le système de capteur optique (30), d'une surface (31) de l'objet (18) tournée vers le capteur optique (50) par rapport à la surface frontale (23) de la zone d'actionnement (22), qui se trouve en particulier sur la surface du sol (15).

5. Procédé selon l'une des revendications précédentes,
**caractérise en ce**
**que** le système de capteur optique (30) émet une pluralité d'impulsions lumineuses (62) l'une après l'autre, un intervalle de temps (tz) pour recevoir les impulsions lumineuses (62) au moyen du système de capteur optique (30) est prédéterminé, et la distance (a) à l'étape c) est détectée par l'intermédiaire de l'intensité des impulsions lumineuses (62) reçues dans l'intervalle de temps (tz).

6. Procédé selon l'une des revendications précédentes,
**caractérise en ce**
**que**, à l'étape b), des images de reconnaissance (64) qui ont été produites à l'aide de la lumière réfléchie du module lumineux (40) et des images de comparaison (63) qui ont été produites sans la lumière réfléchie du module lumineux (40) à l'aide d'une lumière parasite sont enregistrées et évaluées de telle sorte qu'une image de reconnaissance modifiée est générée, de laquelle la lumière parasite a été supprimée.

7. Procédé selon l'une des revendications précédentes,
**caractérise en ce**
**que** la zone d'actionnement (22) n'est surveillée que pendant une durée d'actionnement prédéterminée (t_{B}),
et/ou en ce que le signal de travail n'est fourni que lorsqu'au moins une autre exigence est remplie, en particulier une taille de l'objet (18), une durée de séjour de l'objet (18) dans la zone d'actionnement (22), une séquence définie de mouvements de l'objet (18) dans la zone d'actionnement (22) et/ou un retrait de l'objet (18) dans une durée de distance prédéterminée (t_{E}) de la zone d'actionnement (22),
et/ou qu'un signal d'avertissement perceptible par l'utilisateur (10) est émis avant le déclenchement du signal de travail.

8. Module d'assemblage (20) pour un véhicule automobile (1), avec un système de capteurs optiques (30) qui convient,
a) à recevoir un signal indiquant qu'un utilisateur autorisé est authentifié,
b) à surveiller une zone d'actionnement (22) à l'extérieur du véhicule à moteur (1),
c) à détecter une distance (a) d'un objet (18) dans la zone d'actionnement (22) par rapport à un capteur optique (50) du système de capteur (30),
d) à comparer la distance (a) avec une exigence,
e) à fournir un signal de fonctionnement lorsque l'exigence est atteint,
dans lequel le signal de fonctionnement est un signal pour déverrouiller et/ou verrouiller et/ou ouvrir et/ou fermer une partie mobile (2, 3) du véhicule automobile (1),
dans lequel en particulier un procédé (70) selon l'une quelconque des revendications 1 à 7 est exécutable par le module d'assemblage (20).

9. Module de montage (20) selon la revendication 8,
**caractérise en ce**
**que** le système de capteur optique (30) présente une unité de surveillance (60) qui est conçue pour évaluer les images (61) qui ont été enregistrées par le capteur optique (50), et/ou
en ce que le système de capteur optique (30) présente le capteur optique (50) pour recevoir de la lumière de la zone d'actionnement (22), et le système de capteur optique (30) présente un module de lumière (40) avec au moins une source de lumière (41) pour émettre de la lumière, la source de lumière (41) étant en particulier conçue pour émettre de la lumière dans le domaine non visible.

10. Module d'assemblage (20) selon l'une des revendications précédentes,
**caractérise en ce**
**que** le module de montage (20) présente un élément d'affichage (43) à travers lequel de la lumière visible peut être émise afin de rendre visible à l'utilisateur (10) au moins une partie de la zone d'actionnement (22) et/ou de la durée d'actionnement (t_{B}),
dans lequel en particulier l'élément d'affichage (43) est adapté pour rendre visible une surface d'extrémité (23) de la zone d'actionnement (22) sur une surface de sol (15) sur laquelle le véhicule automobile (1) est debout.

11. Module d'assemblage (20) selon l'une des revendications précédentes,
**caractérise en ce**
**que** la surface frontale (23) de la zone d'actionnement (22) a des dimensions spatiales plus petites qu'une partie du corps, en particulier une main (12) ou un pied (11), de l'utilisateur (10), et/ou
en ce que le capteur optique (50) présente un capteur d'images (53) avec des pixels (54), la partie du corps (11, 12) de l'utilisateur (10) pouvant être représentée dans la zone d'actionnement (22) et/ou la zone d'actionnement (22) avec n pixels (54), en particulier 2 ≤ n ≤ 10, de préférence n=2.

12. Module d'assemblage (20) selon l'une des revendications précédentes,
**caractérise en ce**
**que** le système de capteurs optiques (30) est approprié,
pour surveiller une zone de détection (21) à l'extérieur du véhicule automobile (1) avant l'authentification et, en cas de reconnaissance de l'utilisateur (10) dans la zone de détection (21), pour déclencher un signal pour le début d'un contrôle d'authentification entre un émetteur d'identification (13) et un système de contrôle d'accès (14) du véhicule automobile (1).

13. Module d'assemblage (20) selon l'une des revendications précédentes,
**caractérise en ce**
**que** le capteur optique (50) et/ou le module lumineux (40) sont conçus pour être utilisés à la fois pour surveiller la zone de détection (21) et pour surveiller la zone d'actionnement (22).

14. Module d'assemblage (20) selon l'une des revendications précédentes,
**caractérise en ce**
**que** le capteur optique (50) et/ou le module d'éclairage (40) ont un système de lentilles rigides (42, 51).

15. Système d'authentification (16) comprenant un système de contrôle d'accès (14), un émetteur d'identification (13) et un module d'assemblage (20) selon l'une quelconque des revendications précédentes.
